# EUROPÄISCHE PATENTSCHRIFT

(11) **EP 2 344 292 B1**
(45) Veröffentlichungstag und Bekanntmachung des Hinweises auf die Patenterteilung: **01.06.2016**
(21) Anmeldenummer: 09759657.1
(22) Anmeldetag: 31.10.2009
(51) Int. Cl.: B23B 27/04, B23B 27/06, B23B 29/04

(54) **TRÄGERBLOCK MIT SCHNEIDKÖRPER FÜR EINE DREHMASCHINE, INSBESONDERE LANG-DREHMASCHINE**
SUPPORT BLOCK WITH A CUTTING BODY FOR A LATHE, IN PARTICULAR A LONGITUDINAL LATHE
BLOC DE SUPPORT AVEC UN ÉLÉMENT DE COUPE POUR UNE MACHINE DE TOURNAGE, EN PARTICULIER DE TOURNAGE LONGITUDINAL

(30) Priorität: 04.11.2008 DE 102008055752; 08.10.2009 DE 102009048635
(43) Veröffentlichungstag der Anmeldung: 20.07.2011
(73) Patentinhaber: Simtek Präzisionswerkzeuge GmbH, 72116 Mössingen (DE)
(72) Erfinder: SEIFERMANN, Norbert, 72411 Bodelshausen (DE)
(74) Vertreter: Vonnemann, Gerhard
(86) Internationale Anmeldenummer: PCT/EP2009/007808
(87) Internationale Veröffentlichungsnummer: WO 2010/051945

(56) Entgegenhaltungen:
- WO-A1-03/004226
- DE-A1- 2 548 072
- DE-A1- 3 402 547
- DE-A1- 3 807 900
- DE-C- 957 092
- GB-A- 989 133

## Beschreibung

### Technisches Gebiet:

Die Erfindung betrifft einen Trägerblock mit einem auswechselbaren Schneidkörper mit wenigstens einer Schneide gemäß dem Oberbegriff des Anspruchs 1 oder des Anspruchs 18, zur Positionierung des Trägerblocks auf einer Halterung, insbesondere Arbeitsplatte, einer Drehmaschine, vorzugsweise Lang-Drehmaschine, wobei der Trägerblock wenigstens eine ebene, rückseitige Anlagefläche zur Anlage an oder zur Aufnahme in der Halterung der Drehmaschine aufweist und derselbe zur Ausrichtung in Richtung einer zu bearbeitenden Stange innerhalb der Drehmaschine ausgebildet ist.

### Stand der Technik:

Aus dem Stand der Technik sind sogenannte CNC-gesteuerte Lang-Drehmaschinen mit Stangenführung bekannt, die eine relativ lange Stange rotierend oder ruhend in Axialrichtung der Stange, Z-Richtung, aus einem Durchlass zur abschnittsweisen Bearbeitung herausführt. Dabei fluchtet der Durchlass mit einer Arbeitsplattenebene, auf der Schneidkörper mit Schneiden oder Messern zur spanabhebenden Bearbeitung der Stange angeordnet sind. Die fluchtende Anordnung des Durchlasses mit der Arbeitsplattenebene ist notwendig, damit die Stange möglichst direkt nach dem Austritt aus dem Durchlass durch die Schneidkörper bearbeitet werden kann. Das bedeutet, dass die Schneiden oder Messer der Schneidkörper so nah wie möglich der Durchlassebene angenähert sein müssen.

Hierdurch wird vermieden, dass die Stange durch die Anpresskraft der Schneidkörper mit einem Drehmoment beaufschlagt wird, welche die Stange verbiegen würde. Je näher die Schneidkörper der Ebene des Durchlasses benachbart sind, desto besser kann die Stange durch die Stangenführung abgestützt und gegen Verbiegen gesichert werden. Das ist insbesondere bei Durchmessern der Stange von wenigen Millimetern bis unter ein Millimeter notwendig. Vorzugsweise ragt der zu bearbeitende Bereich der Stange nur um wenige Zehntel, bevorzugt nur um wenige Hundertstel, eines Millimeters unabgestützt aus dem Durchlass heraus, damit die Schneiden oder Messer der Schneidkörper an diesem Bereich der Stange angreifen können.

Die Schneidkörper dienen zum praktisch beliebigen Bearbeiten der Stange, wie zum Einschneiden von Gewinden, zum Aufbringen von Nuten oder Zahnungen oder zum Aufbringen von Hinterschneidungen, Kerben oder Ausnehmungen sowie zum Abstechen. Die Schneidkörper, welche vorzugsweise länglich-quaderförmig mit gleich bleibendem Querschnitt über ihre Länge gestaltet sind, sind entweder in Blöcken aufgenommen, welche mit der Arbeitsplatte verschraubt oder verspannt sind, welche die Arbeitsplattenebene ausbildet, oder die Schneidkörper sind direkt auf die Arbeitsplatte geschraubt.

Um die Schneidkörper oder Messer so nah wie möglich der Ebene des Durchlasses der Drehbank anzunähern, weisen die aus dem Stand der Technik bekannten Trägerblöcke an ihrer der Arbeitsplattenebene zugewandten Seite, nämlich ihrer Rückseite, eine Ausnehmung auf, in welcher die Messer oder Schneidkörper aufgenommen sind. Da die Schneidkörper auf der Rückseite der Blöcke aufgenommen sind, können sich die Schneidkörper gegen die festgelegten Blöcke abstützen, wenn die aus dem Durchlass herausgeführte Stange gegen die Schneidkörper drückt. Des Weiteren wird durch die Anordnung der Schneidkörper auf der Rückseite der Blöcke sichergestellt, dass die Schneidkörper möglichst nah an dem Durchlass positioniert sind. Die Stange wird daher durch die Schneidkörper nur mit einem sehr geringen Drehmoment beaufschlagt, wenn die Schneidkörper zur Bearbeitung gegen die Stange gepresst werden.

Zur Bearbeitung einer Stange können verschiedene Schneidkörper zum Einsatz kommen, welche die Stange in unterschiedlicher Weise bearbeiten. Sofern man den Bearbeitungsraum der Drehmaschine, in welchem die Stange verfahren wird, in Koordinaten unterteilt, wird die Stange in z-Richtung, nämlich in Richtung ihrer Achse, und werden die Schneidkörper gewöhnlich nur in x- und y-Richtung verfahren, um an der Stange abzusetzen

Bei den aus dem Stand der Technik bekannten Lang-Drehmaschinen ist von erheblichem Nachteil, dass zum Auswechseln eines Schneidkörpers der gesamte Trägerblock von der Arbeitsplatte abgeschraubt und der Schneidkörper aus dessen Rückseite entnommen werden muss. Des Weiteren ist nachteilig, dass der entnommene Trägerblock nach dem Einsetzen eines neuen Schneidkörpers nur unter sehr hohem Aufwand wieder an der Arbeitsplatte montiert werden kann. Beim Montieren des Trägerblocks an der Arbeitsplatte ist unter großer Sorgfalt darauf zu achten, dass der Trägerblock in der richtigen Arbeitsstellung an der Arbeitsplatte festgelegt wird. Schon geringste Abweichungen von der korrekten Position des Trägerblocks können zu großen Fehlern an der zu bearbeitenden Stange führen. Eine geringe Verkippung des Trägerblocks oder eine Verschiebung um wenige Hundertstel Millimeter führt zu erheblichen Fehlern an der zu bearbeitenden Stange. Aus diesem Gründen benötigen die heutigen Lang-Drehmaschinen zum Auswechseln eines Schneidkörpers erhebliche Rüstzeiten, in denen natürlich die Lang-Drehmaschine stillsteht. Ebenso ist darauf zu achten, dass beim Montieren des Trägerblocks an der Arbeitsplatte sämtliche Teile sorgfältig von Spänen und Kühlmittel gereinigt sind.

Aus GB 989 133 A ist ein Drehwerkzeug mit einer Schneide bekannt, die in einen demontierbaren Halter geklemmt wird. Dieser Halter ist stirnseitig an einem Trägerblock montierbar, wobei die Befestigung der Schneide mittels eines getrennten Klemmkörpers erfolgt. Die Winkellage des Halters und damit die Lage der Schneide lassen sich mit einer Madenschraube verstellen. Das aus GB 989 133 A bekannte Drehwerkzeug ist jedoch völlig ungeeignet, eine neu eingesetzte Schneide auf einfache Weise in eine korrekte Arbeitsposition zu bringen.

### Technische Aufgabe:

Der Erfindung liegt die Aufgabe zugrunde, einen Trägerblock mit einem daran angepasstem Schneidkörper zu schaffen, welcher auf einfache Weise auf dem Trägerblock austauschbar sein soll, ohne dass der Trägerblock von der Arbeitsplatte entfernt werden muss, und wobei ein neu eingesetzter Schneidkörper auf einfache Weise in eine korrekte Arbeitsposition verbracht werden kann.

### Offenbarung der Erfindung und ihre Vorteile:

Die Aufgabe wird erfindungsgemäß durch einen Trägerblock der eingangs genannten Gattung dadurch gelöst, dass der Trägerblock an seinem vorderen Ende eine zur Längsachse des Trägerblocks im Wesentlichen orthogonal gerichtete Stirnfläche aufweist, in oder auf welcher Mittel zur Aufnahme des Schneidkörpers ausgebildet sind, welcher sich in Fortsetzung des Trägerblocks in Richtung der Längsachse desselben erstreckt, wobei die Schneide des Schneidkörpers sich ebenfalls in Richtung der Längsachse des Trägerblocks erstreckt.

Erfindungsgemäß ist erkannt worden, dass die Ausbildung von Aufnahmemitteln am vorderen Ende oder Kopf des Trägerblocks, das ist das der Stange zugewandte Ende, es erlaubt, einen Schneidkörper vom Trägerblock zu entfernen oder an diesem anzubringen, während der Trägerblock mit der Arbeitsplatte einer Drehmaschine, insbesondere Langdrehmaschine, verschraubt oder verspannt bleibt. Da der Schneidkörper am vorderen Ende des Trägerblocks angeordnet wird und nicht an dessen Rückseite, muss der Trägerblock zum Auswechseln des Schneidkörpers nicht von der Arbeitsplatte abgeschraubt werden. Ein Schneidkörper kann somit in höchst vorteilhafter Weise ausgewechselt werden, ohne den Trägerblock von der Arbeitsplatte zu entfernen. Aufwändige Richtarbeiten am Trägerblock beim Auswechseln des Schneidkörpers werden erfindungsgemäß vermieden. Ein nicht mehr benötigter Schneidkörper ist einfach austauschbar und ein neu eingesetzter Schneidkörper auf einfache Weise in eine korrekte Arbeitsposition verbringbar. Folglich ist die genannte Aufgabe gelöst.

Die Aufnahmemittel umfassen eine Gewindebohrung innerhalb der Stirnfläche des vorderen Endes des Trägerblocks, und der Schneidkörper weist ein Durchgangsloch zum Durchgang einer in die Gewindebohrung passenden Schraube zur Halterung des Schneidkörpers auf der Stirnfläche des vorderen Endes des Trägerblocks auf, wobei der Schneidkörper eine periphere, ebene Schneidkörperseitenfläche besitzt, welche orthogonal zur Längsachse des Trägerblocks gerichtet ist und welche mit der ebenen, rückseitigen Anlagefläche in Fortsetzung derselben des Trägerblocks fluchtet, und die Schneide des Schneidkörpers sich in Richtung der Längsachse des Trägerblocks seitlich des Durchgangslochs erstreckt und orthogonal oder im Wesentlichen orthogonal zur Stirnfläche des Trägerblocks gerichtet ist. Hierdurch kann ein Schneidkörper in einfacher Weise durch eine Schraube mit dem Trägerblock verbunden werden. Vorzugsweise ist die Gewindebohrung in Richtung der Längsachse des Trägerblocks eingebracht und zu dieser parallel ausgerichtet. Durch eine Schraube kann der Schneidkörper mit einfachen Werkzeugen oder mit einem Drehmomentschlüssel mit einer definierten Festigkeit am Trägerblock festgelegt werden.

In erfindungsgemäßer Ausgestaltung ist der Schneidkörper wenigstens teilweise ringförmig als Hülse mit dem Durchgangsloch zum Durchgang der in die Gewindebohrung des Trägerblocks passenden Schraube gestaltet, wobei die Schneide auf dem Rand der Hülse angeordnet ist. Somit ist der Schneidkörper wenigstens teilweise ringförmig als Hülse oder als ringförmige Aufnahmehülse mit dem Durchgangsloch zum Durchgang der in die Gewindebohrung passenden Schraube gestaltet mit einer Ringfläche, welche der Stirnfläche des vorderen Endes des Trägerblocks zugewandt ist.

In weiterer Ausgestaltung weist die ringförmige Hülse des Schneidkörpers einen teilweise quaderförmigen, peripheren Bereich mit einer peripher nach außen gerichteten ebenen Schneidkörperseitenfläche auf, welche mit der ebenen, rückseitigen Anlagefläche in Fortsetzung derselben des Trägerblocks fluchtet, wobei von dem peripheren Bereich die Schneide sich seitlich in Richtung der Längsachse des Schneidkörpers erstreckt.

Der quaderförmige, periphere Bereich kann eine, zur Schneidkörperseitenfläche orthogonal gerichtete schmale Seiten- oder Stirnfläche aufweisen, auf der sich die Schneide erhebt, welche eine Außenfläche aufweist, welche in Fortsetzung der Schneidkörperseitenfläche des Schneidkörpers verläuft oder gegenüber der Schneidkörperseitenfläche des Schneidkörpers wenigstens teilweise zurückgesetzt ist, jedoch die Schneidkörperseitenfläche nicht überragt.

Des Weiteren können die Aufnahmemittel des vorderen Endes des Trägerblocks in der Stirnfläche angeordnete Nuten oder Aussparungen zur eingreifenden Aufnahme von Erhebungen des Schneidkörpers oder umgekehrt umfassen, was bedeutet, dass die Aufnahmemittel bezüglich des vorderen Endes des Trägerblocks und bezüglich der der Stirnfläche des Trägerblocks zugewandten Ringfläche des Schneidkörpers vertauscht sein können.

Die Aufnahmemittel können drei Richtflächen zur Positionierung des Schneidkörpers umfassen, welche durch die Nuten voneinander getrennt sind, welche, ausgehend von der Gewindebohrung bzw. der Längsachse des Trägerblocks, radial nach außen verlaufen zur eingreifenden Aufnahme der zu den Nuten auf der der Stirnfläche zugewandten Ringfläche des Schneidkörpers passend gestalteten Erhebungen oder umgekehrt. Drei Richtflächen erlauben eine nicht überbestimmte flächige Anlage des Schneidkörpers am Trägerblock und dadurch eine korrekte Orientierung und Neigung des Schneidkörpers relativ zum Grundkörper. Verkippungen des Schneidkörpers werden durch drei Richtflächen vermieden. Die Richtflächen können eine Neigung relativ zur Längsachse des Trägerblocks aufweisen, beispielsweise Teile der Mantelfläche eines Kegelstumpfs sein. Durch diese Ausgestaltung ist eine Zentrierwirkung der Richtflächen in einfacher Weise realisierbar. Ebenso wird hierdurch eine korrekte Orientierung des Schneidkörpers relativ zum Grundkörper und eine verdrehsicher Anlage auf diesem kombinatorisch bewirkt.

Durch die Nuten, die mit den Erhebungen zusammenwirken, wird einer Verdrehung des Schneidkörpers auf dem Trägerblock wirkungsvoll entgegengewirkt. Die Erhebungen, welche in die Nuten eingreifen, stützen den Schneidkörper gegen den Trägerblock sicher ab. Vorzugsweise sind die Nuten von der Längsachse des Trägerblocks in radialer Richtung strahlförmig abragend angeordnet, wobei diese bei drei Nuten jeweils einen 120° Winkel einschließen. Das Verschrauben des Schneidkörpers im vorderen Ende des Trägerblocks erlaubt ein rasches Auswechseln des Schneidkörpers.

Zwei Richtflächen können derart gestaltet sein, dass sie Segmente eines Kreisrings ausbilden und die dritte Richtfläche peripher einen geraden Rand aufweist, welcher das vordere Ende der ebenen, rückseitigen Anlagefläche des Trägerblocks begrenzt, wobei die Schneide des Schneidkörpers im Wesentlichen in Fortsetzung der Richtung der ebenen, rückseitigen Anlagefläche ragt.

Zwei Richtflächen können derart gestaltet sein, dass sie Segmente eines Kreisrings ausbilden; die dritte Richtfläche kann peripher einen geraden Rand aufweisen, welcher das vordere Ende der ebenen, rückseitigen Anlagefläche begrenzt, wobei die Schneide des Schneidkörpers sich im Wesentlichen in Fortsetzung der Richtung der ebenen, rückseitigen Anlagefläche längs des geraden Randes erstreckt.

Die dritte, peripher einen geraden Rand aufweisende Richtfläche kann in einen eckigen Randwulst münden, welcher am vorderen Ende des Trägerblocks ausgebildet ist und mit der ebenen, rückseitigen Anlagefläche des Trägerblocks eine Ebene ausbildet. Somit kann der ringförmige Bereich des hülsen- oder torusförmigen Schneidkörpers in einen teilweise quaderförmigen Bereich mit einem eckigen Randwulst übergehen. Ein kreisringförmiger Abschnitt und ein eckiger Abschnitt stellen eine korrekte Positionierung des Schneidkörpers auf dem Trägerblock im Sinne eines Poka-Yoke-Prinzips (Schlüssel-Loch-Prinzip) sicher. Ein entsprechend ausgebildeter Schneidkörper kann nur in einer Position auf den Trägerblock aufgesetzt werden. Von diesem quaderförmigen Bereich oder eckige Randwulst ragt die Schneide in Richtung der Längsachse des Trägerblocks bzw. der Achse des Schneidkörpers ab. Am freien Ende der Schneide ist eine Schneidfläche oder eine Schneidkante ausgebildet.

Der Trägerblock kann des Weiteren einen länglich-quaderförmigen Montagebereich mit vier Seitenflächen aufweisen, wobei die Ränder der einen Teilkreisring bildenden Segmente der beiden Richtflächen den Trägerblock an drei der Seitenflächen in radialer Richtung überragen, und die Schneide des Schneidkörpers im Wesentlichen in Fortsetzung der Richtung der ebenen Anlagefläche ragt, welche die vierte Seitenfläche des Montagebereichs des Trägerblocks bildet, wobei die Außenfläche der Schneide im Wesentlichen in Fortsetzung der ebenen Anlagefläche des Trägerblocks mit der Anlagefläche fluchtet oder gegenüber derselben zurückgesetzt ist, jedoch nicht überragt. Durch die fluchtende Ausbildung des Kopfes mit der rückseitigen Anlagefläche kann der Trägerblock mit der rückseitigen Anlagefläche an die Arbeitsplatte einer Drehmaschine angelegt werden. Die rückseitige Anlagefläche ist insoweit die Rückseite eines montierten Trägerblocks.

Der Trägerblock ist vorzugsweise länglich-quaderförmig gestaltet mit gleich bleibenden Querschnitt über seine Länge und weist eine Längsachse auf, an deren einem Ende, das vordere Ende oder der Kopf, die Stirnfläche mit einer, vorzugsweise im Wesentlichen, orthogonalen Ausrichtung zur Längsachse des Trägerblocks sowie zur z-Achse der Stange ausgebildet ist. Durch diese konkrete Ausgestaltung ist der Kopf des Trägerblocks mit einem aufgesetzten Schneidkörper in x- oder y- Richtung auf die in z-Richtung verfahrbare Stange anpressbar.

Der Schneidkörper kann wenigstens eine Schneide, zum Beispiel zum radialen Einstechen in die Stange, aufweisen, wobei die Schneide eine relativ zur Längsachse des Trägerblocks geneigte Schneidfläche besitzt.

In weiterer erfindungsgemäßer Ausgestaltung geht der ringförmige Bereich des Schneidkörpers in einen teilweise quaderförmigen Bereich über, von welchem die Schneide sich in Richtung der Achse des Schneidkörpers erstreckt. Hierdurch ist eine in z-Richtung verfahrbare Stange mit dem Trägerblock bearbeitbar. Die Stange kann in spanabhebender Weise weitgehend beliebig mit Gewinden, Profilen oder anderen Strukturen versehen werden.

Der Schneidkörper weist eine Schneide zum radialen Einstechen in die Stange auf, wobei die Schneide eine relativ zur Längsachse des Trägerblocks geneigte Schneidfläche aufweist. Durch einen solchen Schneidkörper können Kerben oder Aussparungen in die Mantelfläche einer zu bearbeitenden Stange eingebracht werden.

Des Weiteren kann der Schneidkörper eine Schneide zum Einstechen und Längsdrehen der Stange aufweisen, wobei die Schneide zwei relativ zur Längsachse des Trägerblocks unterschiedlich stark geneigte Schneidflächen aufweist. Mit einem solchen Schneidkörper können in die Stange Kerben oder Aussparungen eingebracht werden. Darauf kann die Stange ausgedreht werden.

Der Schneidkörper kann eine Schneide zum Abstechen der Stange aufweisen, wobei die Schneide eine Schneidfläche aufweist, die relativ zur Längsachse und relativ zur Querachse des Trägerblocks geneigt ist und in eine Schneidkante mündet, welche relativ zur Längsachse die gleiche Neigung aufweist wie die Schneidfläche. Mit einem solchen Schneidkörper können spitz zulaufende Kerben in eine Stange eingebracht werden.

Der Schneidkörper kann eine Schneide zum Aufbringen eines Formeinstichzahnprofils auf die Stange aufweisen, wobei die Schneide eine zick-zack-förmig gezahnte Schneidfläche aufweist, die in mehrere Schneidkanten mündet. Mit einem solchen Schneidkörper kann eine Zahnstange gefertigt werden.

Der Schneidkörper kann eine Schneide mit einem Formeinstich-Rundprofil aufweisen, wobei die Schneide ein Schneidfläche aufweist, in welcher ein Bogen ausgebildet ist, welche von zwei Schneidkanten begrenzt wird. Mit einem solchen Schneidkörper kann auf der Mantelfläche einer Stange ein Rundprofil ausgebildet werden.

Der Schneidkörper kann eine Schneide zum Gewindedrehen aufweisen, wobei die Schneide zwei zu einer Schneidkante spitz zulaufende Schneidflächen aufweist, wobei die Schneidkante relativ zur Längsachse und relativ zur Querachse des Trägerblocks geneigt ist. Mit einem solchen Schneidkörper kann auf eine Stange ein Gewinde aufgebracht werden.

In allgemeiner Weise können beliebig geartete, kundenspezifische Formprofile oder Rund- oder Zahnprofile als Schneiden vorgesehen werden. Derartige Formeinstiche können beliebig geartet sein, zum Beispiel als Kombinationen aus Einstich mit Fase und innenliegenden Radien. Darin liegt ein wesentlicher Vorteil der Erfindung, dass kundenspezifische Formprofile auf dem Trägerblock verwendet werden können.

In weiterer Ausgestaltung des Trägerblocks können die Mittel zur Aufnahme des Schneidkörpers als Bajonettverschluss sowohl am Trägerblock als auch am Schneidkörper ausgebildet sein.

Bei Formplatten sind Schneide und Trägerwerkzeug, nämlich Trägerblock, um einen Winkel von 90° gedreht montiert eingebaut.

Ein erfindungsgemäßer Trägerblock mit einem auswechselbaren Schneidkörper mit wenigstens einer Schneide, zur Positionierung des Trägerblocks auf einer Halterung, insbesondere Arbeitsplatte, einer Lang-Drehmaschine, wobei der Trägerblock wenigstens eine ebene, rückseitige Anlagefläche zur Anlage an oder zur Aufnahme in der Halterung der Drehmaschine aufweist und derselbe zur Ausrichtung in Richtung einer zu bearbeitenden Stange innerhalb der Lang-Drehmaschine ausgebildet ist, ist durch folgende Merkmale gekennzeichnet:
a) der Trägerblock weist an seinem vorderen Ende eine zu seiner Längsachse orthogonal oder im Wesentlichen orthogonal gerichtete Stirnfläche auf, in welcher eine Gewindebohrung angeordnet ist
b) in der Stirnfläche sind Nuten oder Aussparungen vorhanden,
   welche unter gleichen winkeln von der Gewindebohrung (6) ausgehend nach Außen zur Peripherie des Trägerblocks (1) verlaufen
c) der Schneidkörper, der sich in montiertem Zustand in Fortsetzung des Trägerblocks in Richtung der Längsachse erstreckt, weist ein Durchgangsloch für eine in die Gewindebohrung passende Schraube zur Halterung des Schneidkörpers auf der Stirnfläche des Trägerblocks sowie auf seiner der Stirnfläche zugewandten ringförmigen Deckfläche Erhebungen auf, die passend zum Eingriff in die Nuten oder Aussparungen innerhalb der Stirnfläche des Trägerblocks gestaltet sind
d) die Schneide des Schneidkörpers ragt ebenfalls in Richtung der Längsachse des Trägerblocks, wobei die Außenfläche der Schneide im Wesentlichen in Fortsetzung der ebenen Anlagefläche des Trägerblocks verläuft, jedoch gegenüber derselben zurückgesetzt ist und dieselben nicht überragt.

In der Zeichnung veranschaulichen beispielhaft und schematisch
- Figur 1: einen länglich-quaderförmiger Trägerblock zur Aufnahme eines Schneidkörpers in perspektivischer Ansicht auf das vordere Ende,
- Figur 2: eine Draufsicht auf das vordere Ende oder den Kopf des Trägerblocks der Figur 1 in Blickrichtung der Längsachse desselben,
- Figur 3: eine teilweise durchbrochene Seitenansicht des Trägerblocks aus den Figuren 1 und 2 zur Darstellung des Innengewindes,
- Figur 4: eine teilweise durchbrochene Seitenansicht des Trägerblocks der Figur 3, wobei eine Seitenfläche, die rückseitige Anlagefläche, des Trägerblocks in Fortsetzung derselben mit einer Seitenfläche des Kopfes fluchtet,
- Figur 5: eine perspektivische Explosionsansicht eines Sets, bestehend aus Trägerblock, Schraube und auf den Trägerblock aufzusetzenden Schneidkörper mit Schneide zum radial Einstechen,
- Figur 6: eine Draufsicht auf den auf den Trägerblock aufgesetzten Schneidkörper in Richtung der Längsachse des Trägerblocks der Figur 5,
- Figur 7: eine teilweise durchbrochene Seitenansicht des Trägerblocks mit montiertem Schneidkörper aus den Figuren 5 und 6,
- Figur 8: eine teilweise durchbrochene Seitenansicht des Trägerblocks mit montiertem Schneidkörper der Figur 7 in einer gegenüber Figur 7 um 90° gedrehten Ansicht, wobei die rückseitige Anlagefläche des Trägerblocks in Fortsetzung derselben sowohl mit einer der Seitenflächen des Kopfes als auch mit einer der Seitenflächen des Schneidkörpers fluchtet,
- Figur 9: eine teilweise durchbrochene Seitenansicht des Schneidkörpers aus Figur 5 zur Darstellung des Durchgangsloches,
- Figur 10: eine Draufsicht auf den Schneidkörper aus Figur 5 und 9 in Richtung der Längsachse des Trägerblocks,
- Figur 11: eine gegenüber der Figur 9 um 90° gedrehte, teilweise durchbrochene Seitenansicht des Schneidkörpers aus den Figuren 5 und 9,
- Figur 12: eine perspektivische Ansicht des Schneidkörpers aus Figur 5 und 9,
- Figur 13: eine perspektivische Ansicht eines Trägerblocks, einer Schraube und eines auf den Trägerblock aufgesetzten Schneidkörpers zum Einstechen und Längsdrehen,
- Figur 14: eine Draufsicht auf den montierten Schneidkörper der Figur 13,
- Figur 15: eine teilweise durchbrochene Seitenansicht des Trägerblocks mit montiertem Schneidkörper aus den Figuren 13 und 14,
- Figur 16: eine teilweise durchbrochene Seitenansicht des Trägerblocks mit Schneidkörper gemäß Figur 15 in einer gegenüber Figur 15 um 90° gedrehten Ansicht, wobei die rückseitige Anlagefläche des Trägerblocks in Fortsetzung derselben sowohl mit einer der Seitenflächen des Kopfes als auch mit einer der Seitenflächen des Schneidkörpers fluchtet,
- Figur 17: eine teilweise durchbrochene Seitenansicht des Schneidkörpers aus Figur 13,
- Figur 18: eine Draufsicht auf den Schneidkörper der Figuren 13 und 17 in Blickrichtung der Längsachse des Trägerblocks,
- Figur 19: eine gegenüber Figur 17 um 90° gedrehte, teilweise durchbrochene Seitenansicht des Schneidkörpers aus Figur 13 und 17,
- Figur 20: eine perspektivische Ansicht des Schneidkörpers aus Figur 13, 17,
- Figur 21: eine perspektivische Explosionsansicht eines Sets bestehend aus Trägerblock, Schraube und auf den Trägerblock aufzusetzenden Schneidkörper zum Abstechen,
- Figur 22: eine Draufsicht auf den Kopf des Trägerblocks in Richtung seiner Längsachse, wobei der Schneidkörper gemäß Figur 21 montiert ist,
- Figur 23: eine teilweise durchbrochene Seitenansicht des Trägerblocks mit montiertem Schneidkörper aus den Figuren 21 und 22,
- Figur 24: eine teilweise durchbrochene Seitenansicht des Trägerblocks mit montiertem Schneidkörper gemäß Figur 23 in einer gegenüber Figur 23 um 90° gedrehten Ansicht, wobei die rückseitige Anlagefläche des Trägerblocks in Fortsetzung derselben sowohl mit einer der Seitenflächen des Kopfes als auch mit einer der Seitenflächen des Schneidkörpers fluchtet,
- Figur 25: eine teilweise durchbrochene Seitenansicht des Schneidkörpers aus Figur 21,
- Figur 26: eine Draufsicht auf den Schneidkörper aus Figur 21 in Richtung der Längsachse des Trägerblocks,
- Figur 27: eine gegenüber Figur 25 um 90° gedrehte, teilweise durchbrochene Seitenansicht des Schneidkörpers aus Figur 21,
- Figur 28: eine perspektivische Ansicht des Schneidkörpers aus Figur 21,
- Figur 29: eine perspektivische Explosionsansicht eines Sets bestehend aus Trägerblock, Schraube und auf den Trägerblock aufzusetzenden Schneidkörper mit einem Formeinstich-Zahnprofil,
- Figur 30: eine Draufsicht auf den montierten Schneidkörper der Figur 29,
- Figur 31: eine teilweise durchbrochene Seitenansicht des Trägerblocks mit montiertem Schneidkörper aus den Figuren 29 und 30,
- Figur 32: eine teilweise durchbrochene Seitenansicht des Trägerblocks mit montiertem Schneidkörper gemäß Figur 31 in einer gegenüber Figur 31 um 90° gedrehten Ansicht, wobei die rückseitige Anlagefläche des Trägerblocks in Fortsetzung derselben sowohl mit einer der Seitenflächen des Kopfes als auch mit einer der Seitenflächen des Schneidkörpers fluchtet,
- Figur 33: eine teilweise durchbrochene Seitenansicht des Schneidkörpers aus Figur 29,
- Figur 34: eine Draufsicht auf den Schneidkörper aus Figur 29 in Richtung der Längsachse des Trägerblocks,
- Figur 35: eine gegenüber Figur 33 um 90° gedrehte, teilweise durchbrochene Seitenansicht des Schneidkörpers aus Figur 29,
- Figur 36: eine perspektivische Ansicht des Schneidkörpers aus Figur 29,
- Figur 37: eine perspektivische Explosionsansicht eines Sets, bestehend aus Trägerblock, Schraube und auf den Trägerblock aufzusetzenden Schneidkörper mit einem Formeinstich-Rundprofil,
- Figur 38: eine Draufsicht auf den montierten Schneidkörper der Figur 37 in Richtung der Längsachse des Trägerblocks,
- Figur 39: eine teilweise durchbrochene Seitenansicht des Trägerblocks mit montiertem Schneidkörper aus den Figuren 37 und 38,
- Figur 40: eine teilweise durchbrochene Seitenansicht des Trägerblocks mit montiertem Schneidkörper gemäß Figur 39 in einer gegenüber Figur 39 um 90° gedrehten Ansicht, wobei die rückseitige Anlagefläche des Trägerblocks in Fortsetzung derselben sowohl mit einer der Seitenflächen des Kopfes als auch mit einer der Seitenflächen des Schneidkörpers fluchtet,

- Figur 41: eine teilweise durchbrochene Seitenansicht des Schneidkörpers aus Figur 37,
- Figur 42: eine perspektivische Ansicht des Schneidkörpers aus Figur 37,
- Figur 43: eine gegenüber Figur 41 um 90° gedrehte, teilweise durchbrochene Seitenansicht des Schneidkörpers aus Figur 37,
- Figur 44: eine Draufsicht auf den Schneidkörper aus Figur 37 in Richtung der Längsachse des Trägerblocks,
- Figur 45: eine teilweise durchbrochene Seitenansicht eines weiteren Schneidkörpers zum Gewindedrehen,
- Figur 46: eine Draufsicht auf den Schneidkörper aus Figur 45 in Richtung dessen Mittelachse,
- Figur 47: eine gegenüber Figur 45 um 90° gedrehte, teilweise durchbrochene Seitenansicht des Schneidkörpers aus Figur 45 und
- Figur 48: eine perspektivische Ansicht des Schneidkörpers aus Figur 45.

### Bevorzugte Ausführungsformen der Erfindung:

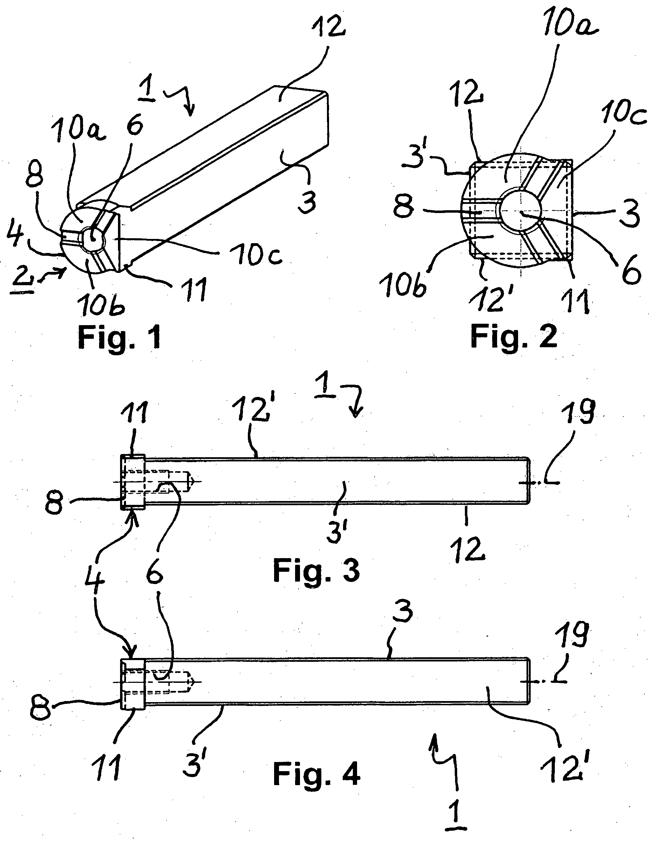

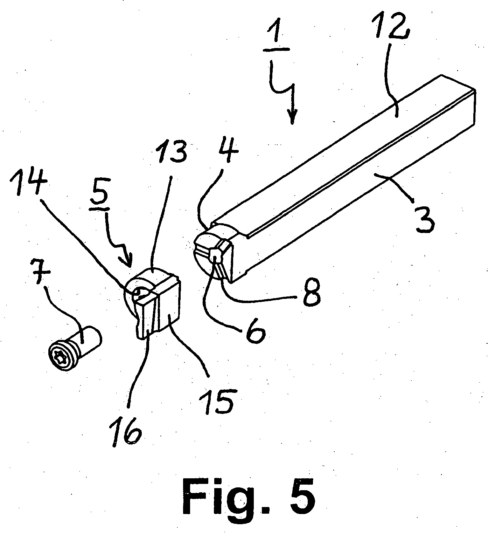

Figur 1 zeigt in perspektivischer Ansicht einen quaderförmig-länglichen Trägerblock 1 mit über seine Länge gleich bleibendem Querschnitt zur Positionierung auf einer nicht gezeigten Arbeitsplatte einer ebenfalls nicht gezeigten Drehmaschine, wie Lang-Drehmaschine. Der Trägerblock 1 umfasst vier Längsoberflächen 3 und 12 sowie die planparallel hierzu verlaufenden Längsoberflächen 3' und 12'. Die Längsoberfläche 3 ist die rückseitige, ebene Anlagefläche 3 zur Anlage des Trägerblocks 1 an der Arbeitsplatte der Lang-Drehmaschine. Das vordere Ende des Trägerblocks 1 ist als dessen Kopf 4 ausgestaltet, welcher in einer Draufsicht in Blickrichtung der Längsachse 19 des Trägerblocks 1 eine Stirnfläche 2 aufweist. Der Kopf 4 dient zur Aufnahme - und Ausrichtung in Richtung einer nicht gezeigten zu bearbeitenden Stange - eines Schneidkörpers 5, welcher ab der Figur 5 dargestellt ist, und weist hierfür Aufnahmemittel auf. Der Kopf 4 ragt vom Trägerblock 1 ab und bildet ein freies Ende desselben.

Die Aufnahmemittel des Trägerblocks 1 umfassen eine im Kopf 4 des Trägerblocks 1 ausgebildete Gewindebohrung 6. Hierdurch kann ein Schneidkörper 5, 5', 5", 5"', 5"" und 5""" in einfacher Weise durch eine Schraube 7, Figur 5, mit dem Trägerblock 1 verbunden werden. Vorzugsweise ist die Gewindebohrung 6 in Richtung der Längsachse 19 des Trägerblocks 1 eingebracht und zu dieser parallel ausgerichtet. Durch die Schraube 7 kann der Schneidkörper 5, 5', 5", 5"', 5"" und 5""' mit einfachen Werkzeugen oder mit einem Drehmomentschlüssel mit einer definierten Festigkeit am Trägerblock 1 befestigt werden.

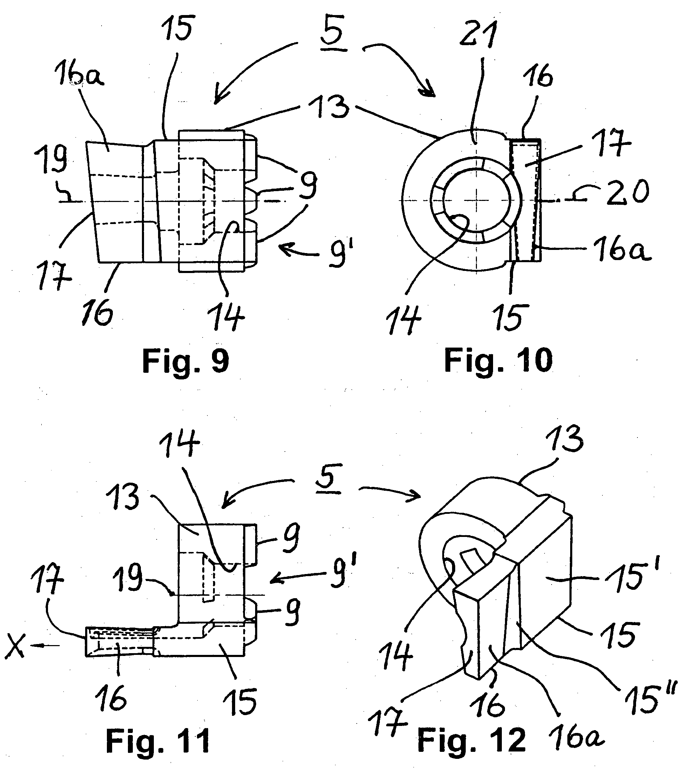

Die Aufnahmemittel des Kopfes 4 des Trägerblocks 1 umfassen des Weiteren Nuten 8 zur eingreifenden Aufnahme von Erhebungen 9, Figur 9, des Schneidkörpers 5,5',5",5"',5"",5""', die auf der dem Trägerblock 1 zugewandten Stirn- oder Deckfläche 9' des Schneidkörpers sich erheben. Durch die Nuten 8, die mit den Erhebungen 9 passend zusammenwirken, wird einer Verdrehung des Schneidkörpers 5,5',5",5"',5"",5""' auf dem Trägerblock 1 entgegengewirkt. Die Erhebungen 9, die in die Nuten 8 eingreifen, stützen den Schneidkörper 5,5', 5",5"',5"",5""' gegen den Trägerblock 1 ab. Die Nuten 8 erstrecken sich von der Längsachse 19 des Trägerblocks 1 bzw. von der Gewindebohrung 6 in radialer Richtung strahlförmig nach außen, wobei die Nuten 8 jeweils einen Winkel von 120° einschließen. Die Anordnung der Nuten 8 in Zusammenhang mit den gleichermaßen gerichteten Erhebungen 9 bewirkt eine sichere, insbesondere verdrehsichere Auflage des Schneidkörpers 5,5',5",5"',5"",5""' auf dem Trägerblock 1.

Die Aufnahmemittel des Kopfes 4 des Trägerblocks 1 umfassen des Weiteren drei Richtflächen 10a,10b,10c auf der Stirnfläche 2 des Kopfes 4 zur Positionierung des Schneidkörpers 5,5',5",5"',5"",5""', wobei die Richtflächen durch die von der Längsachse 19 des Trägerblocks 3 radial abgehenden Nuten 8 voneinander getrennt sind. Drei Richtflächen 10a, 1Ob, 10c erlauben eine nicht überbestimmte flächige Anlage des Schneidkörpers 5,5',5",5"',5"",5""', auf dem Trägerblock 1 und dadurch eine korrekte Orientierung und Neigung des Schneidkörpers 5,5',5",5"', 5"",5""' relativ zum Trägerblock 1. Verkippungen des Schneidkörpers 5,5',5",5"', 5"",5""' werden durch die drei Richtflächen 10a,10b,10c vermieden. Die Richtflächen 10a,10b,10c können eine Neigung relativ zur Längsachse 19 des Trägerblocks 1 aufweisen, beispielsweise Teile der Mantelfläche eines Kegelstumpfs sein. Durch diese Ausgestaltung ist eine Zentrierwirkung der Richtflächen 10a, 10b,10c gegeben.

Zwei der drei Richtflächen 10a, 10b sind derart ausgebildet, dass sie Segmente eines Kreisrings ausbilden und eine dritte Richtfläche 10c mündet in einen eckigen Randwulst 11, welcher peripher am Kopf 4 ausgebildet und welcher eben ist in Fortsetzung der ebenen Auflagefläche 3 des Trägerblocks. Ein kreisringförmiger Abschnitt und ein eckiger Abschnitt stellen eine korrekte Positionierung des Schneidkörpers 5,5',5",5"',5"",5""' auf dem Trägerblock 1 im Sinne eines PokaYoke-Prinzips (Schlüssel-Loch-Prinzip) sicher. Der entsprechend ausgebildeter Schneidkörper 5,5',5",5"',5"",5""' kann nur in einer Position auf dem Trägerblock 1 aufgesetzt werden.

Statt der beschriebenen Aufnahmemittel können auf der Stirnfläche des Trägerblocks und der zugewandten Stirnfläche des Schneidkörpers auch andere Aussparungen und Erhebungen, also Passungen, vorhanden sein: es muss nur gewährleistet sein, dass eine korrekte, verdrehsichere Positionierung des Schneidkörpers auf dem Trägerblock im Sinne des Poka-Yoke-Prinzips gegeben ist.

Der Trägerblock 1 weist einen quaderförmigen Montagebereich auf, welcher an drei der Seitenflächen 3', 12 und 12' des Trägerblocks 1 in radialer Richtung von den Rändern der Segmente der Richtflächen 10a und 10b des Kopf 4 überragt wird, wie es in der Figur 2 durch die gestrichelten Linien der Kanten der Seitenflächen 3', 12 und 12' und der überstehenden Eckkanten der benachbarten Seitenflächen 3' und 12 sowie 3' und 12' zu entnehmen ist.

Dabei fluchtet der Kopf 4 mit der rückseitigen Anlagefläche 3 des Quaders, d.h. die rückseitige Anlagefläche 3 des Trägerblocks verläuft bis zum vorderen Ende des Kopfes 4 oder bis zu Stirnfläche 2 desselben. Durch diese fluchtende Ausbildung des Kopfes 4 mit der rückseitigen Anlagefläche 3 kann der Trägerblock 1 mit der rückseitigen Anlagefläche 3 an die Arbeitsplatte einer Drehmaschine angelegt werden; die rückseitige Anlagefläche 3 ist insoweit die Rückseite eines montierten Trägerblocks 1.

Mit der Bezugsziffer 19 ist die Mitten-Längsachse des Trägerblocks 1 bezeichnet, an deren vorderen Ende der Kopf 4 zur orthogonalen Ausrichtung auf die Achse einer nicht gezeigten Stange ausgebildet ist. Durch diese konkrete Ausgestaltung ist der Kopf 4 des länglichen Trägerblocks 1 mit einem aufgesetzten Schneidkörper 5 in x- oder y- Richtung auf eine in z-Richtung verfahrbare Stange anpressbar. Figur 1 zeigt einen Trägerblock 1 zur Aufnahme eines Schneidkörpers 5 in Perspektive. Figur 2 zeigt eine Draufsicht auf den Kopf 4 des Trägerblocks 1 gemäß Figur 1 in Richtung der Längsachse 19 des Trägerblocks 1. Figur 3 zeigt eine teilweise durchbrochene Seitenansicht des Trägerblocks 1 aus den Figuren 1 und 2. Figur 4 zeigt eine teilweise durchbrochene Seitenansicht des Trägerblocks 1 gemäß Figur 3, wobei die rückseitige Anlagefläche 3 des quaderförmigen Trägerblocks 1 mit dem Kopf 4 bis zu dessen Stirnfläche 2 fluchtet.

In allen Figuren, in denen der Trägerblock 1 dargestellt ist, ist dieser jeweils gleich ausgestaltet für sämtliche unterschiedlichen Schneidkörper 5, 5', 5", 5"', 5"", 5""'.

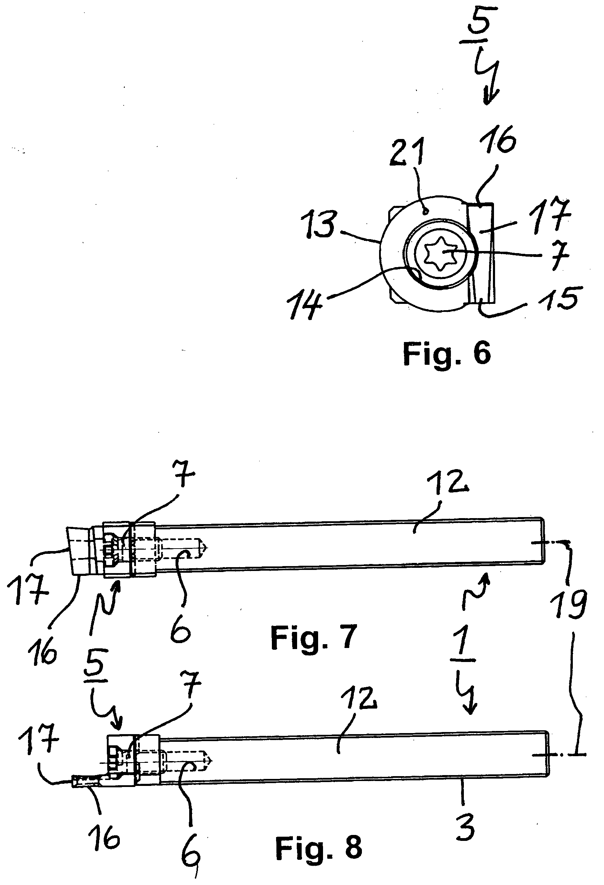

Figur 5 zeigt eine perspektivische Explosionsansicht des Trägerblocks 1, der Schraube 7 und eines auf den Trägerblock 1 aufzusetzenden Schneidkörpers 5 zum radial Einstechen. Figur 6 zeigt eine Draufsicht auf den Schneidkörper 5 in Richtung der Längsachse 19, wobei der Schneidkörper 5 gemäß der Figuren 7 oder 8 montiert ist. Figur 7 zeigt eine teilweise durchbrochene Seitenansicht des Trägerblocks 1 mit montiertem Schneidkörper 5 aus den Figuren 5 und 6. Figur 8 zeigt eine teilweise durchbrochene Seitenansicht des Trägerblocks 1 mit montiertem Schneidkörper 5 gemäß Figur 7 in einer gegenüber der Figur 7 um 90° gedrehten Ansicht, wobei die rückseitige Anlagefläche 3 des quaderförmigen Trägerblocks 1 mit dem Kopf 4 fluchtet, auf welchen ein Schneidkörper 5 aufgeschraubt ist. Hierdurch ist eine in z-Richtung verfahrbare Stange bearbeitbar, welche mit einem Gewinde, Profilen oder anderen Strukturen versehen werden kann. Das Verschrauben des Schneidkörpers 5 mit dem Kopf 4 erlaubt ein rasches Auswechseln des Schneidkörpers 5.

Die Figuren 9 bis 12, 17 bis 20, 25 bis 28, 33 bis 36 und 41 bis 44 nun zeigen im Detail eine beispielhafte Ausgestaltung eines Schneidkörpers 5, 5', 5", 5"', 5"", 5""', wie er auf dem Trägerblock 1 der Figuren 1 bis 8 zum Einsatz kommt. Sämtliche Schneidkörper 5, 5', 5", 5"', 5"", 5""' sind ähnlich und hinsichtlich ihrer Passgestaltung identisch und passen auf ein und denselben Trägerblock 1 in sämtlichen Figuren, wobei sich die Schneidkörper 5, 5', 5", 5"', 5"", 5""' nur in der Gestaltung ihrer Schneide 16, 16', 16", 16"', 16"", 16""' unterscheiden. Das bedeutet, dass die dem Trägerblock 1 bzw. dem Kopf 4 des Trägerblocks 1 zugewandte Deckfläche 9' sämtlicher Schneidkörper 5, 5', 5", 5"', 5"", 5""' gleich ausgestaltet ist und diese sich nur hinsichtlich der Gestaltung der Schneiden 16, 16', 16", 16"', 16"", 16""' unterscheiden.

Der Schneidkörper 5 ist als eine im Wesentlichen zylindrische Hülse 5 mit einem Durchgangsloch 14 mit einer Mittelachse 19 gestaltet, welche mit der Längsachse 19 des Trägerblocks 1 zusammenfällt (und deshalb mit identischem Bezugszeichen versehen ist). Die dem Trägerblock 1 zugewandte Deckfläche ist im Wesentlichen eine ringförmige bzw. teilweise ringförmige Deckfläche 9'.

Die Deckfläche 9' weist längliche Erhebungen 9 auf, welche in die Nuten 8 im Kopf 4 passend eingreifen gemäß dem Nut-Feder-Prinzip. Hierdurch kann der Schneidkörper 5 verdrehsicher auf dem Kopf 4 festgelegt werden. Der Schneidkörper 5 besteht im Wesentlichen aus einer teilweisen ringförmige Aufnahmehülse 13 mit einem Durchgang 14 für die Schraube 7, welche die Aufnahmehülse 13 durchgreift und diese am Trägerblock 1 befestigt, sowie aus einer auf die Aufnahmehülse 13 aufgesetzten Schneide 16, wie es den Figuren 9, 11 und 12 zu entnehmen ist.

Der ringförmige Bereich der Aufnahmehülse 13 des Schneidkörpers 5 geht in einen teilweise quaderförmigen Bereich 15 mit einer peripheren, ebenen Ringseitenfläche 15' über, wie es aus den Figuren 10, 11 und 12 ersichtlich ist, so dass die Normale der Ringseitenfläche 15' und die Längsachse 19 des Schneidkörper 5 senkrecht aufeinander stehen bzw. die Ringseitenfläche 15' zur Längsachse 19 des Schneidkörper 5 orthogonal gerichtet ist. Gemäß den Figuren 9, 11 und 12 ragt von der der Deckfläche 9' des Schneidkörpers 5 gegenüber liegenden schmalen Seiten- oder Stirnfläche 15" des quaderförmigen Bereichs 15 seitlich eine Schneide 16 in Richtung der Längsachse 19 des Schneidkörper 5 ab. Die peripher nach außen gerichtete Schneidenoberfläche 16a erstreckt sich somit in Fortsetzung der Schneidkörperseitenfläche 15' des Schneidkörper 5, wobei gewöhnlich die rückseitige Schneidenoberfläche 16a der Schneide 16 nicht mit der Schneidkörperseitenfläche 15' fluchtet, sondern zu dieser zurückgesetzt und/oder geneigt verläuft in Abhängigkeit von der Ausgestaltung der Schneide 16, wie es den Figuren 12, 18, 20, 26, 28, 33 oder 36 zu entnehmen ist.

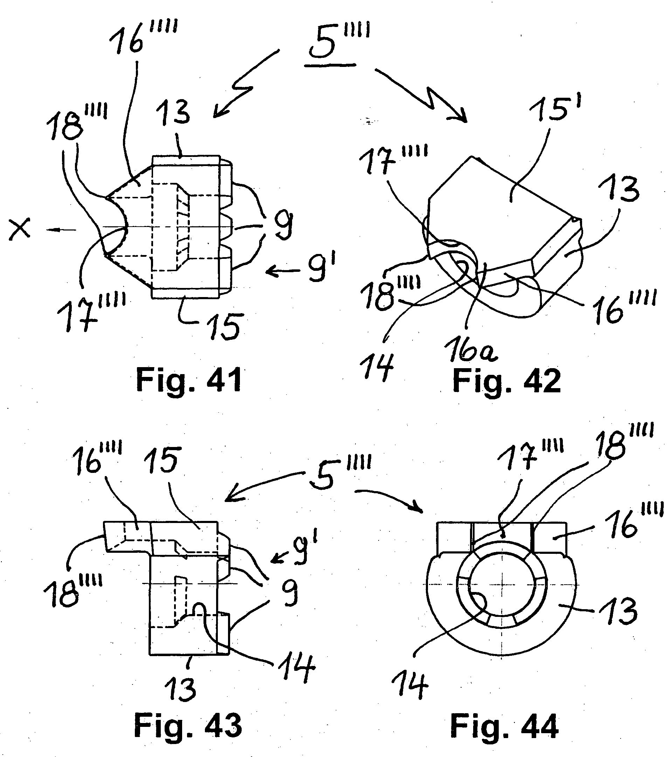

Die Beispiele der Figuren 41 bis 44 zeigen hingegen einen Schneidkörper 5"", dessen periphere, rückseitige Schneidkörperseiterifläche 15' in der rückseitigen Schneidenoberfläche 16a der Schneide 16"" fluchtend fortgesetzt ist.

Am freien Ende der Schneide 15 ist eine Schneidfläche oder -kante 17 ausgebildet, welche für unterschiedliche Schneidkörper verschiedene Ausformungen aufweisen kann.

Wie insbesondere aus den Figuren 8, 13 und 16 ersichtlich, setzt sich nach der Montage des Schneidkörpers 5 die ebene, rückseitige Auflagefläche 3 des Trägerblocks 1, welche bis zur Stirnfläche 2 des vorderen Endes des Trägerblocks 1 reicht, in der ebenen Ringseitenfläche 15' des quaderförmigen Bereichs 15 der Aufnahmehülse 13 des Schneidkörpers 5 fluchtend fort, weshalb die ebene Ringseitenfläche 15' die Rückseite des Schneidkörpers 5 darstellt und mit der rückseitigen Auflagefläche 3 des Trägerblocks 1 eine Ebene bildet. Diese prinzipielle Gestaltung des Schneidkörpers 5 ist allen Schneidkörpern zueigen.

Der Schneidkörper 5 der Figuren 5 bis 12 weist eine Schneide 16 zum radialen Einstechen in eine Stange auf, wobei die Schneide 16 eine relativ zur Längsachse 19 des Trägerblocks 1 geneigte Schneidfläche 17 aufweist. Durch einen solchen Schneidkörper 5 können Kerben oder Aussparungen in die Mantelfläche der zu bearbeitenden Stange eingebracht werden; in Figur 11 ist durch einen Pfeil die x-Verfahrrichtung des Schneidkörpers 5 relativ zur Stange angedeutet.

Figur 9 zeigt eine teilweise durchbrochene Seitenansicht des Schneidkörpers 5 aus Figur 5. Figur 10 zeigt eine Draufsicht auf den Schneidkörper 5 aus Figur 5 in Richtung der Längsachse 19 des Trägerblocks 1; Figur 11 zeigt eine gegenüber Figur 9 um 90° gedrehte, teilweise durchbrochene Seitenansicht des Schneidkörpers 5 aus Figur 5; Figur 12 zeigt eine perspektivische Ansicht des Schneidkörpers 5 aus Figur 5.

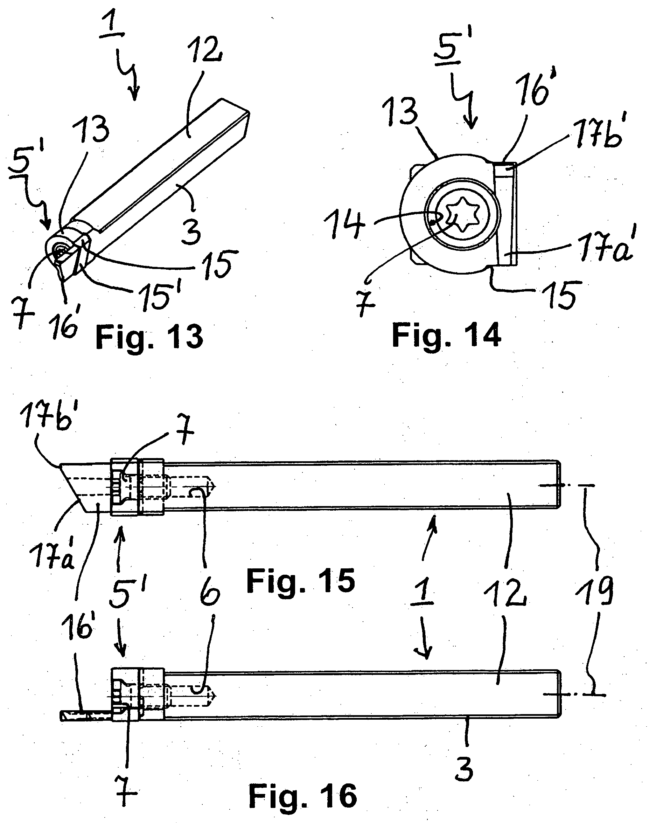

Der Schneidkörper 5' der Figuren 13 bis 20 ist ähnlich gestaltet wie derjenige der Figuren 5 bis 12 und unterscheidet sich nur in der Ausgestaltung seiner Schneide 16' zum Einstechen und Längsdrehen einer Stange auf, wobei die Schneide 16' zwei relativ zur Längsachse 19 des Trägerblocks 1 unterschiedlich stark geneigte Schneidflächen 17a', 17b' aufweist. Mit einem solchen Schneidkörper 5' können in die Stange Kerben oder Aussparungen eingebracht werden. Darauf kann die Stange ausgedreht werden. Zur weiteren Beschreibung der Figuren 13 bis 16 sei, auf die Beschreibung der Figuren 5 bis 8 verwiesen.

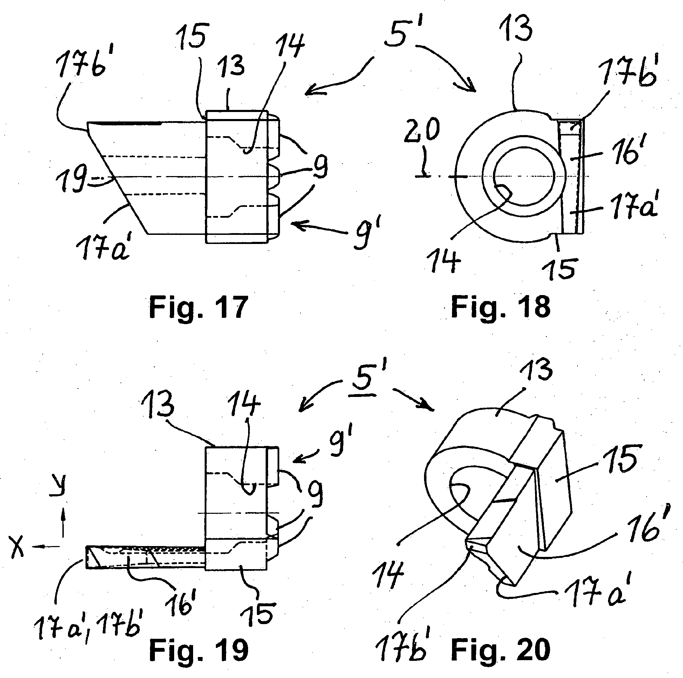

Figur 17 zeigt eine teilweise durchbrochene Seitenansicht des Schneidkörpers 5' aus Figur 13, Figur 18 eine Draufsicht auf den Schneidkörper 5' der Figur 13 in Richtung der Längsachse 19 des Trägerblocks 1, Figur 19 eine gegenüber Figur 17 um 90° gedrehte, teilweise durchbrochene Seitenansicht des Schneidkörpers 5' aus Figur 13. Figur 20 ist eine perspektivische Ansicht des Schneidkörpers 5' aus Figur 13. In Figur 19 geben die Pfeile die x-y-Verfahrrichtungen des Schneidkörpers 5' relativ zu einer zu bearbeitenden Stange an.

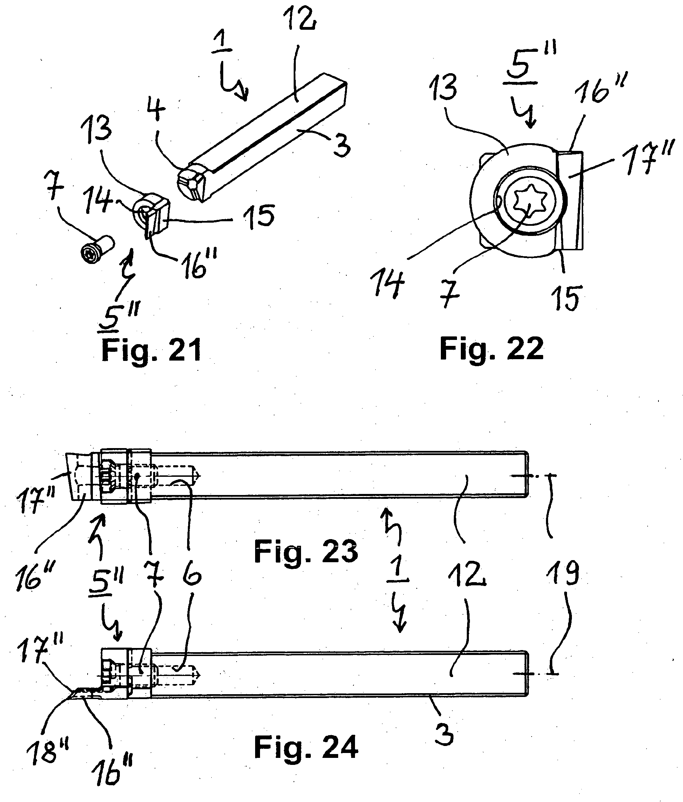

Der Schneidkörper 5" der Figuren 21 bis 28 weist eine Schneide 16", welche eine Schneidfläche 17" besitzt, die relativ zur Längsachse 19 und relativ zur Querachse 20 des Trägerblocks 1 geneigt ist und in eine Schneidkante 18" mündet, welche relativ zur Längsachse 19 die gleiche Neigung aufweist wie die Schneidfläche 17". Mit einem solchen Schneidkörper 5" können spitz zulaufende Kerben in eine Stange eingebracht werden. Zur weiteren Beschreibung der Figuren 21 bis 24 wird auf die Beschreibung der Figuren 5 bis 8 verwiesen.

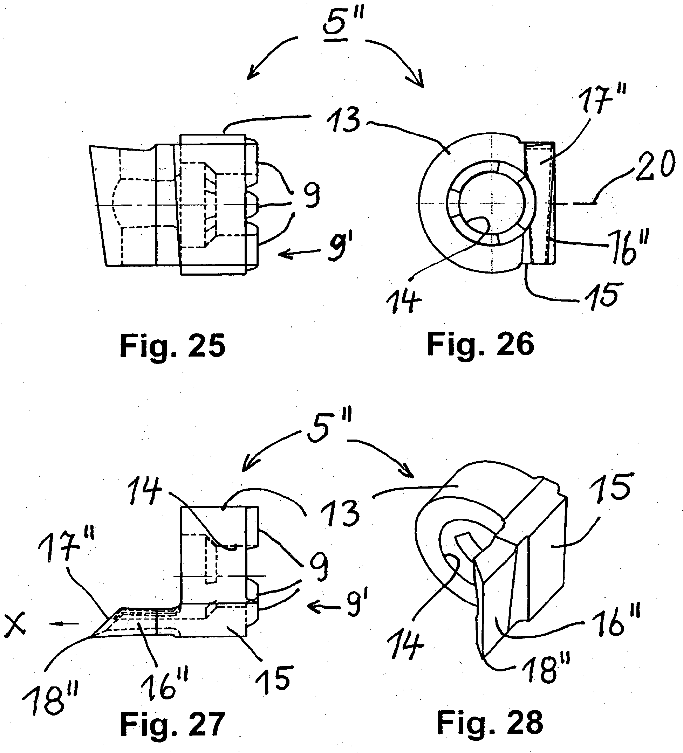

Die Figuren 25 bis 28 zeigen den Schneidkörper 5" im Detail. Figur 25 zeigt eine teilweise durchbrochene Seitenansicht des Schneidkörpers 5" aus Figur 21. Figur 26 zeigt eine Draufsicht auf das Schneidkörper 5" aus Figur 21 in Richtung der Längsachse 19 des Trägerblocks 1. Figur 27 zeigt eine gegenüber Figur 25 um 90° gedrehte, teilweise durchbrochene Seitenansicht des Schneidkörpers 5" aus Figur 21. Figur 28 zeigt eine perspektivische Ansicht des Schneidkörpers 5" aus Figur 21. Die Verfahrrichtung X des Schneidkörpers 5" relativ zu einer Stange zeigt der Pfeil in Figur 27.

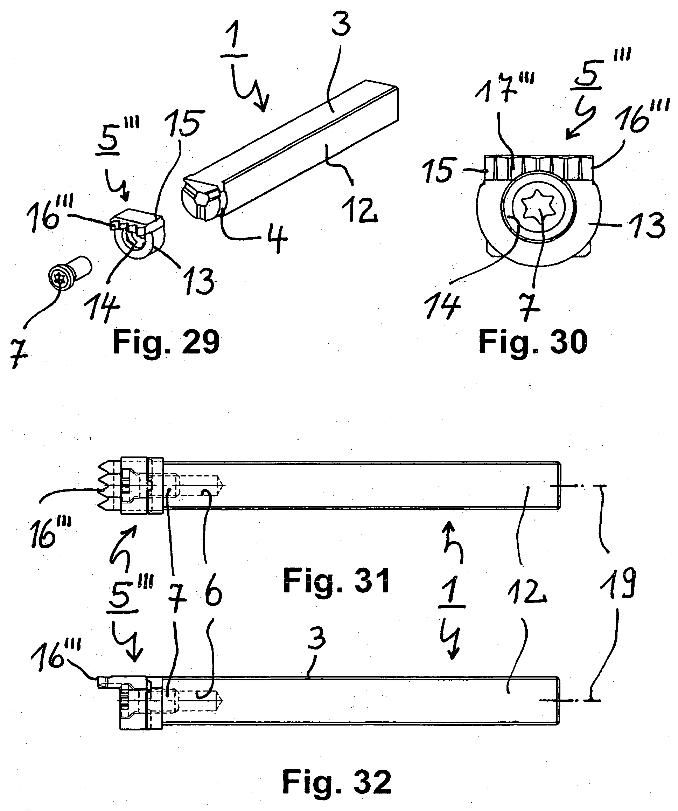

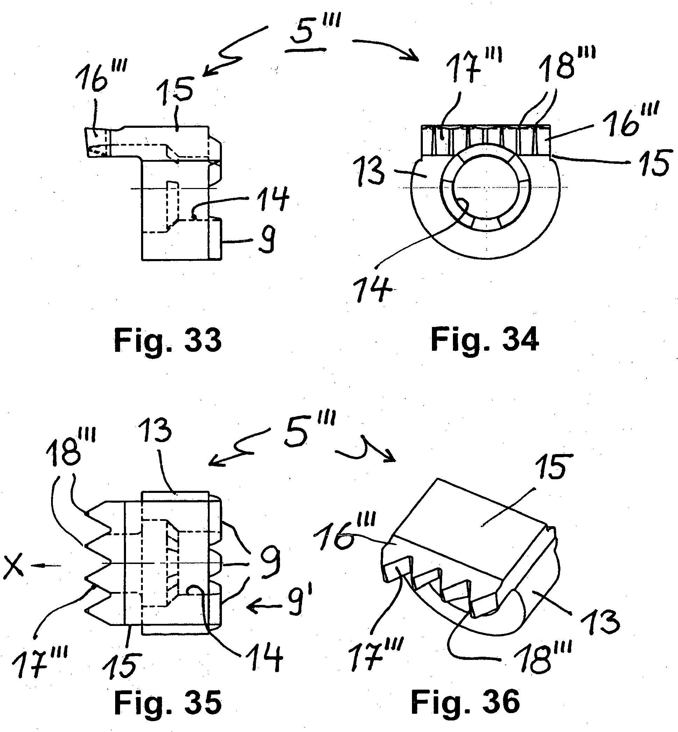

Der Schneidkörper 5"' der Figuren 29 bis 36 weist eine Schneide 16"' zum Aufbringen eines Formeinstichzahnprofils auf, welche eine zick-zack-förmig gezahnte Schneidfläche 17"' besitzt, die in mehrere Schneidkanten 18"', Figuren 34 und 36, mündet. Mit einem solchen Schneidkörper 5"' kann eine Zahnstange gefertigt werden. Zur weiteren Beschreibung der Figuren 29 bis 32 wird auf die Beschreibung der Figuren 5 bis 8 verwiesen.

Die Figuren 33 bis 36 zeigen den Schneidkörper 5"' im Detail. Figur 33 zeigt eine teilweise durchbrochene Seitenansicht des Schneidkörpers 5"' aus Figur 29; Figur 34 zeigt eine Draufsicht auf den Schneidkörper 5"' in Richtung der Längsachse 19 des Trägerblocks 1. Figur 35 zeigt eine gegenüber Figur 33 um 90° gedrehte, teilweise durchbrochene Seitenansicht des Schneidkörpers 5"' aus Figur 29; Figur 36 zeigt eine perspektivische Ansicht des Schneidkörpers 5"' aus Figur 29. Der Pfeil in Figur 35 zeigt die x-Verfahrrichtung des Schneidkörpers 5"' relativ zur Stange.

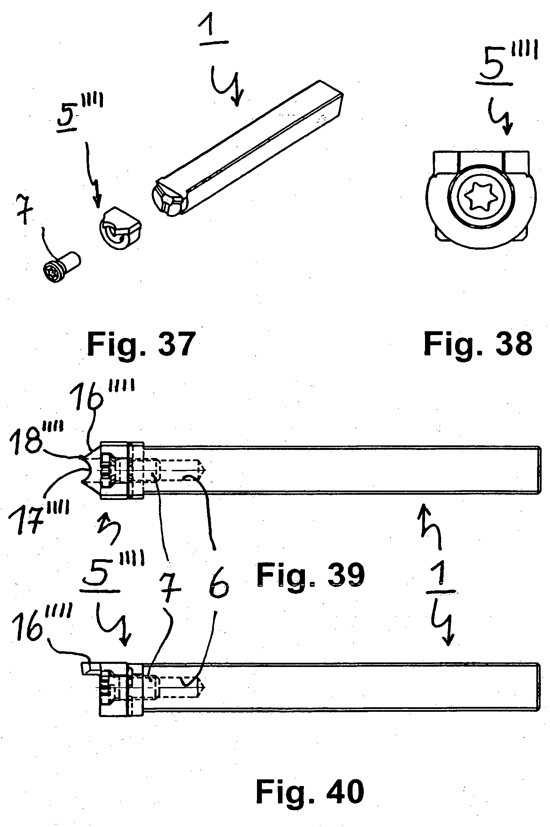

Der Schneidkörper 5"" der Figuren 37 bis 44 weist eine Schneide 16"" mit einem Formeinstich-Rundprofil auf, welche eine Schneidfläche 17"" besitzt, in welcher ein Bogen ausgebildet ist, welcher von zwei Schneidkanten 18"", Figur 41, begrenzt ist. Mit einem solchen Schneidkörper 5"" kann auf der Mantelfläche einer Stange ein Rundprofil ausgebildet werden. Zur weiteren Beschreibung der Figuren 37 bis 40 wird auf die Beschreibung der Figuren 5 bis 8 verwiesen.

Die Figuren 41 bis 44 zeigen den Schneidkörper 5"" im Detail. Figur 41 zeigt eine teilweise durchbrochene Seitenansicht des Schneidkörpers 5"" aus Figur 37. Figur 42 zeigt eine perspektivische Ansicht des Schneidkörpers 5""; Figur 43 zeigt eine gegenüber Figur 41 um 90° gedrehte, teilweise durchbrochene Seitenansicht des Schneidkörpers 5"". Figur 44 zeigt eine Draufsicht auf den Schneidkörper 5"" aus Figur 37 in Richtung der Längsachse 19 des Trägerblocks 1. Der Pfeil in Figur 41 gibt die x-Verfahrrichtung des Schneidkörpers 5"" relativ zur Stange an.

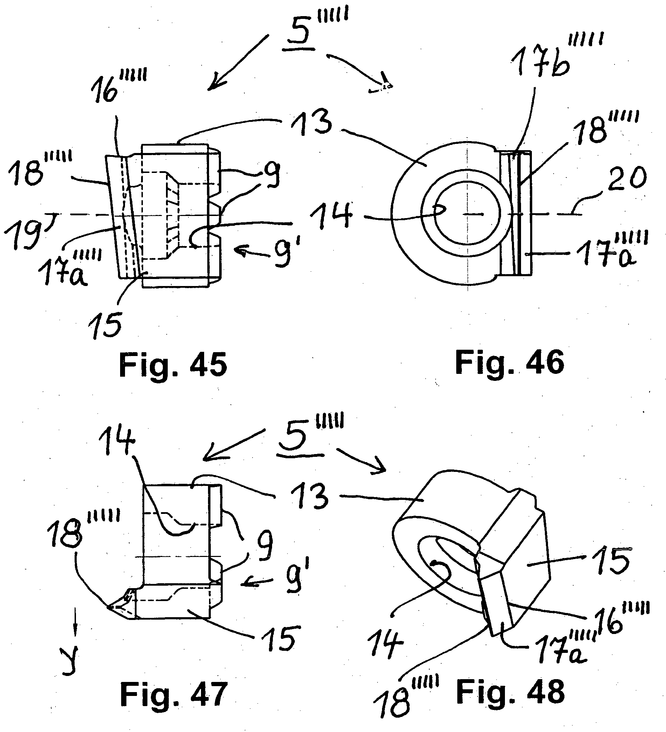

Die Figuren 45 bis 48 zeigen einen weiteren Schneidkörper 5""' im Detail. Der Schneidkörper 5""' weist eine Schneide 16""' zum Gewindedrehen auf, wobei die Schneide 16""' zwei zu einer Schneidkante 18""' spitz zulaufende Schneidflächen 17a""', 17b""' aufweist; die Schneidkante 18""' ist relativ zur Längsachse 19 und relativ zur Querachse 20 des Trägerblocks 1 geneigt. Mit einem solchen Schneidkörper 5""' kann auf eine Stange ein Gewinde aufgebracht werden.

Figur 45 zeigt eine teilweise durchbrochene Seitenansicht eines Schneidkörpers 5""' zum Gewindedrehen. Figur 46 zeigt eine Draufsicht auf den Schneidkörper 5""' aus Figur 45 in Richtung der Längsachse 19 des Trägerblocks 1. Figur 47 zeigt eine gegenüber Figur 45 um 90° gedrehte, teilweise durchbrochene Seitenansicht des Schneidkörpers 5""' aus Figur 45. Figur 48 zeigt eine perspektivische Ansicht des Schneidkörpers 5""' aus Figur 45. Der Pfeil in Figur 47 gibt die y-Verfahrrichtung des Schneidkörpers 5""' relativ zur Stange an.

In den Figuren 1 bis 48 kennzeichnen gleiche Bezugszeichen die gleichen Elemente des Trägerblocks 1 bzw. der Schneidkörper 5, 5', 5", 5"', 5"", 5""'. Die Längsachse 19 und die Querachse 20 des im Wesentlichen quaderförmigen. Trägerblocks 1 sind orthogonal zueinander orientiert. Eine zu der Längsachse 19 oder der Querachse 20 geneigte Fläche oder Kante schließt mit der Längsachse 19 oder der Querachse einen Winkel ein, der von einem rechten Winkel verschieden ist. Unter Neigung wird daher die Ausbildung eines Winkels verstanden, der von einem rechten Winkel verschieden ist.

Aus den Figuren ist in wesentlicher Weise ersichtlich, dass alle Trägerblöcke 1 und weitere (u.w.), zu ihrer einen ebenen, rückseitigen Anlagefläche 3 u.w. eine zu dieser orthogonal oder im Wesentlichen orthogonal gerichtete Stirnfläche 2 u.w. aufweisen, auf denen ein Schneidkörper 5 u.w. platziert ist. Allen Schneidkörpern 5 u.w. ist gemeinsam, dass diese ringförmige Hülsen 13, die einen umlaufenden, stirnseitigen, vorderen Rand 21 aufweisen. Allen Schneidkörpern 5 u.w. ist gemeinsam, dass diese je einen zumindest teilweise quaderförmigen, peripheren Bereich 15 mit einer peripher nach außen gerichteten ebenen Schneidkörperseitenfläche 15' aufweisen, die mit der ebenen, rückseitigen Anlagefläche 3 des Trägerblocks 1 in Fortsetzung der Anlagefläche 3 fluchtet. Allen Schneidkörpern 5 u.w. ist gemeinsam, dass jeder zumindest teilweise quaderförmige, periphere Bereich 15 mit der peripher nach außen gerichteten ebenen Schneidkörperseitenfläche 15' eine schmale, periphere Seiten- oder Stirnfläche 15" aufweist, die in der Ebene des umlaufenden, stirnseitigen Randes 21 des als Hülse 13 geformten Schneidkörpers 5 u.w. oder in einer hierzu parallelen Ebene liegt, wobei die Normale der Seiten- oder Stirnfläche 15" und die Normale der peripheren Schneidkörperseitenfläche 15' senkrecht aufeinander stehen. Auf dieser Seiten- oder Stirnfläche 15" erhebt sich eine Schneide 16 u.w. mit einer Schneidkante 17, 18 u.w. dergestalt, dass die Schneide 16 u.w. in Richtung dieser Normalen der Seiten- oder Stirnfläche 15" ragt; die Richtung der Normalen ist die Hauptrichtung der Schneide 16 u.w.. Die Schneide 16 u.w. eines jeden Schneidkörpers 5 u.w. kann als Prisma oder Quader oder Polyeder oder als beliebiger geometrischer Körper, auch mit wenigstens teilweise gekrümmten Flächen, geformt sein. Die Schneide 16 u.w. kann eine periphere Außenfläche 16a aufweisen, die in Fortsetzung der Schneidkörperseitenfläche 15' des Schneidkörpers 5 usw. verläuft oder gegenüber der Schneidkörperseitenfläche 15' des Schneidkörpers 5 u.w. wenigstens teilweise zurückgesetzt ist oder sonst wie beliebig verläuft, jedoch die Schneidkörperseitenfläche 15' nicht überragt. Wie insbesondere aus den Figuren 6, 8, 10, 11, 12, 14, 16, 18, 19, 20, 22, 24, 25, 26, 27, 28, 30, 32, 33, 34, 36, 38, 40, 42, 43, 44, 45, 46, 47, 48 ersichtlich ist, sind die Schneiden 16 u.w. eines jeden Schneidkörpers 5 u.w. unterschiedlich geformt, wie auch die Schneidkanten 17, 18 u.w. der unterschiedlichen Schneiden 16 u.w. unterschiedlich, nämlich entsprechend den Anforderungen der auszuführenden Bearbeitungen, geformt sind.

### Gewerbliche Anwendbarkeit:

Die Erfindung ist gewerblich anwendbar, da der Trägerblock zusammen mit den Schneidkörpern auf einer Arbeitsplatte einer Drehmaschine, insbesondere einer Lang-Drehmaschine, montierbar und in der Produktion von Drehkörpern der verschiedensten Ausgestaltungen einsetzbar ist. Der Trägerblock zusammen mit den Schneidkörpern stellt ein Bearbeitungsset zur Verfügung, wobei in vorteilhafter Weise ein und derselbe Trägerblock die verschiedensten vorbeschriebenen Schneidkörper aufzunehmen imstande ist, welche sich prinzipiell nur in der Gestaltung ihrer Schneiden unterscheiden. Somit brauchen für eine gegebene Größe nur noch identische Trägerblöcke vorgehalten werden, weil auf alle Trägerblöcke die unterschiedlichsten Schneidkörper aufgesetzt werden können.

### Liste der Bezugszeichen:

- 1: Trägerblock
- 2: Stirnfläche des Kopfes des Trägerblocks
- 3: ebene, rückseitige Anlagefläche
- 3': zur rückseitigen Anlagefläche planparallel verlaufende Längsfläche
- 4: Kopf oder vorderes Ende des Trägerblocks
- 5, 5', 5", 5"', 5"", 5""': Schneidkörper
- 6: Gewindebohrung
- 7: Schraube
- 8: Nuten
- 9: in die Nuten passende Erhebungen
- 9': Deckfläche des Schneidkörpers
- 10a, 10b, 10c: Richtflächen
- 11: Randwulst
- 11': gerader Rand des vorderen Endes des Trägerblocks
- 12, 12': planparallel sich gegenüberliegende Seitenflächen des Trägerblocks
- 13: Schneidkörper im Wesentlichen in Form einer Hülse
- 14: Durchgangsloch
- 15: quaderförmiger Bereich des Schneidkörpers
- 15': ebene Schneidkörperseitenfläche oder Ringseitenfläche
- 15": schmale Seiten- oder Stirnfläche des quaderförmigen Bereichs 15
- 16, 16', 16", 16"', 16"", 16""': Schneide des Schneidkörpers
- 16a: Außenfläche der Schneide des Schneidkörpers
- 17,17a',17b',17",17"', 17"",17a""',17b""': Schneidflächen oder -kanten der Schneiden des Schneidkörpers
- 18,18",18"',18"",18""' Schneidkanten: der Schneidflächen der Schneiden
- 19: Längsachse des Trägerblocks
- 20: Querachse des Trägerblocks
- 21: umlaufender, stirnseitiger, vorderer Rand des als Hülse geformten Schneidkörpers

## Patentansprüche

1. Trägerblock (1) mit einem auswechselbaren Schneidkörper (5, 5' , 5" , 5"', 5"" , 5""') mit wenigstens einer Schneide (16, 16' , 16" , 16"' , 16"" , 16""'), zur Positionierung des Trägerblocks (1) auf einer Halterung, insbesondere Arbeitsplatte, einer Drehmaschine, vorzugsweise Lang-Drehmaschine, wobei der Trägerblock (1) wenigstens eine ebene, rückseitige Anlagefläche (3) zur Anlage an oder zur Aufnahme in der Halterung der Drehmaschine aufweist und derselbe zur Ausrichtung in Richtung einer zu bearbeitenden Stange innerhalb der Drehmaschine ausgebildet ist, **dadurch gekennzeichnet, dass** der Trägerblock (1) an seinem vorderen Ende (4) eine zur Längsachse (19) des Trägerblocks (1) im Wesentlichen orthogonal gerichtete Stirnfläche (2) aufweist, in oder auf welcher Mittel zur Aufnahme des Schneidkörpers (5 , 5' , 5" , 5"' , 5"", 5""') ausgebildet sind, welcher sich in Fortsetzung des Trägerblocks (1) in Richtung der Längsachse (19) desselben erstreckt, wobei die Schneide (16, 16', 16", 16"', 16"", 16""') des Schneidkörpers (5, 5', 5", 5"', 5"", 5"") sich ebenfalls in Richtung der Längsachse (19) des Trägerblocks (1) erstreckt, wobei die Aufnahmemittel eine Gewindebohrung (6) innerhalb der Stirnfläche (2) des vorderen Endes (4) des Trägerblocks (1) umfassen, und der Schneidkörper (5, 5', 5", 5"', 5"", 5""') ein Durchgangsloch ( 14) zum Durchgang einer in die Gewindebohrung (6) passenden Schraube (7) zur Halterung des Schneidkörpers (5, 5', 5", 5"', 5"" , 5""') auf der Stirnfläche (2) des vorderen Endes (4) des Trägerblocks (1) aufweist und die Schneide (16, 16',16"', 16"' , 16"", 16""') des Schneidkörpers (5 , 5' , 5" , 5"' , 5"" , 5""') in Richtung der Längsachse (19) des Trägerblocks (1) seitlich des Durchgangslochs (14) ragt und im Wesentlichen orthogonal zur Stirnfläche (2) des Trägerblocks (1) gerichtet ist.

2. Trägerblock nach Anspruch 1, **dadurch gekennzeichnet, dass** der Schneidkörper (5, 5', 5", 5"', 5"", 5""') eine periphere, ebene Schneidkörperseitenfläche (15') aufweist, welche parallel zur Längsachse (19) des Trägerblocks (1) gerichtet ist und welche mit der ebenen, rückseitigen Anlagefläche (3) in Fortsetzung derselben des Trägerblocks (1) fluchtet,

3. Trägerblock nach Anspruch 1 oder 2, **dadurch gekennzeichnet, dass** der Schneidkörper (5, 5', 5", 5"', 5"", 5""') wenigstens teilweise ringförmig als Hülse (13) mit dem Durchgangsloch (14) zum Durchgang der in die Gewindebohrung (6) des Trägerblocks ( 1) passenden Schraube (7) gestaltet ist, wobei die Schneide (16, 16' , 16" , 16"' , 16"", 16""') auf dem Rand der Hülse (13) angeordnet ist.

4. Trägerblock nach einem der vorherigen Ansprüche, **dadurch gekennzeichnet, dass** die ringförmige Hülse (13) des Schneidkörpers (5 , 5' , 5" , 5"' , 5"" , 5""') einen teilweise quaderförmigen, peripheren Bereich (15) mit einer peripher nach außen gerichteten ebenen Schneidkörperseitenfläche (15') aufweist, die mit der ebenen, rückseitigen Anlagefläche (3) in Fortsetzung derselben des Trägerblocks (1) fluchtet, wobei vom peripheren Bereich (15) die Schneide (16, 16' , 16" , 16"', 16"", 16""') in Richtung der Längsachse (19) des Schneidkörpers (5, 5', 5" , 5"', 5"" , 5"") ragt.

5. Trägerblock nach Anspruch 4, **dadurch gekennzeichnet, dass** der quaderförmige, periphere Bereich (15) eine schmale Seitenfläche ( 15") aufweist, auf der sich die Schneide (16, 16' , 16" , 16"' , 16"" , 16 ""') erhebt, welche eine Außenfläche (16a) aufweist, welche in Fortsetzung der Schneidkörperseitenfläche (15') des Schneidkörpers (5 , 5' , 5" , 5"' , 5"" , 5""') verläuft oder gegenüber der Schneidkörperseitenfläche (15') des Schneidkörpers (5 , 5' , 5" , 5"', 5"", 5""') wenigstens teilweise zurückgesetzt ist und somit die Schneidkörperseitenfläche (15') nicht überragt.

6. Trägerblock nach einem der vorherigen Ansprüche, **dadurch gekennzeichnet, dass** die Aufnahmemittel des vorderen Endes (4) des Trägerblocks (1) in der Stirnfläche (2) angeordnete Nuten (8) oder Aussparungen zur eingreifenden Aufnahme von Erhebungen (9 ) des Schneid körpers (5, 5', 5 ", 5"', 5"", 5""') oder umgekehrt umfassen.

7. Trägerblock nach einem der vorherigen Ansprüche, **dadurch gekennzeichnet, dass** die Aufnahmemittel des vorderen Endes (4) des Trägerblocks (1) Richtflächen (10a , 10b , 10c), vorzugsweise drei Richtflächen, zur Positionierung des Schneidkörpers (5, 5', 5", 5"', 5"", 5""') umfassen, die durch Nuten (8) voneinander getrennt sind, welche, ausgehend von der Gewindebohrung (6) bzw. der Längsachse (19) des Trägerblocks (1), radial nach außen verlaufen zur eingreifenden Aufnahme der zu den Nuten (8) auf der der Stirnfläche (2) zugewandten Ringfläche (9') des Schneidkörpers (5 , 5' , 5", 5 "', 5"" , 5""') passend gestalteten Erhebungen (9) oder umgekehrt.

8. Trägerblock nach Anspruch 7, **dadurch gekennzeichnet, dass** zwei Richtflächen (10a , 10b) derart gestaltet sind, dass sie Segmente eines Kreisrings ausbilden und die dritte Richtfläche (10c) peripher einen geraden Rand (11') aufweist, welcher das vordere Ende der ebenen, rückseitigen Anlagefläche (3) begrenzt, wobei die Schneide (16, 16', 16", 16"' , 16"" , 16""') des Schneidkörpers (5 , 5' , 5" , 5"' , 5"" , 5""') sich im Wesentlichen in Fortsetzung der Richtung der ebenen, rückseitigen Anlagefläche (3) längs des geraden Randes (11') erstreckt.

9. Trägerblock nach Anspruch 8, **dadurch gekennzeichnet, dass** die dritte, peripher einen geraden Rand aufweisende Richtfläche (10c) in einen eckigen Randwulst (11) mündet, welcher am vorderen Ende (4) des Trägerblocks (1) ausgebildet ist und mit der ebenen, rückseitigen Anlagefläche (3) des Trägerblocks (1), eine Ebene ausbildet.

10. Trägerblock nach einem der vorherigen Ansprüche, **dadurch gekennzeichnet, dass** der Trägerblock (1) einen länglich-quaderförmigen Montagebereich mit vier Seitenflächen (2, 3 , 3' , 12 ) aufweist, wobei die Ränder der einen Teilkreisring bildenden Segmente der beiden Richtflächen (10a , 10b) den Trägerblock (1) an drei der Seitenflächen (2, 3 , 3' , 12) in radialer Richtung überragen, und die Schneide (16, 16' , 16" , 16"' , 16"" , 16""') des Schneidkörpers (5, 5', 5" , 5"' , 5"" , 5""') sich im Wesentlichen in Fortsetzung der Richtung der ebenen Anlagefläche (3) erstreckt, welche die vierte Seitenfläche des Montagebereichs des Trägerblocks (1) bildet, wobei die Außenfläche (16a) der Schneide im Wesentlichen in Fortsetzung der ebenen Anlagefläche (3) des Trägerblocks (1) mit der Anlagefläche (3) fluchtet.

11. Trägerblock nach einem der vorherigen Ansprüche, **dadurch gekennzeichnet, dass** der Schneidkörper (5) eine Schneide (16) zum radialen Einstechen in die Stange aufweist, wobei die Schneide (16) eine relativ zur Längsachse (19) des Trägerblocks (2) geneigte Schneidfläche (17) besitzt.

12. Trägerblock nach einem der vorherigen Ansprüche 1 bis 10, **dadurch gekennzeichnet, dass** der Schneidkörper (5') eine Schneide (16') zum Einstechen und Längsdrehen der Stange aufweist, wobei die Schneide (16') zwei relativ zur Längsachse (19 ) des Trägerblocks (2) unterschiedlich stark geneigte Schneidflächen (17a', 17b') aufweist.

13. Trägerblock nach einem der vorherigen Ansprüche 1 bis 10, **dadurch gekennzeichnet, dass** der Schneidkörper (5") eine Schneide (16") zum Abstechen der Stange aufweist, wobei die Schneide (16") eine Schneidfläche (17") aufweist, die relativ zur Längsachse (19) und relativ zur Querachse (20) des Trägerblocks (2) geneigt ist und in eine Schneidkante (18") mündet, welche relativ zur Längsachse (19) die gleiche Neigung aufweist wie die Schneidfläche (17") zur Längsachse (19).

14. Trägerblock nach einem der vorherigen Ansprüche 1 bis 10, **dadurch gekennzeichnet, dass** der Schneidkörper (5"') eine Schneide (16"') zum Aufbringen eines Formeinstichzahnprofils auf die Stange aufweist, wobei die Schneide (16"') eine tick-zack-förmig gezahnte Schneidfläche (17"') aufweist, die in mehrere Schneidkanten (18"') mündet.

15. Trägerblock nach einem der vorherigen Ansprüche 1 bis 10, **dadurch gekennzeichnet, dass** der Schneidkörper (5"") eine Schneide (16"") mit einem Formeinstich-Rundprofil aufweist, wobei die Schneide (16"") eine Schneidfläche (17"") aufweist, in welcher ein Bogen ausgebildet ist, welche von zwei Schneidkanten (18"") begrenzt ist.

16. Trägerblock nach einem der vorherigen Ansprüche 1 bis 10, **dadurch gekennzeichnet, dass** der Schneidkörper (5""') eine Schneide (16""') zum Gewindedrehen aufweist, wobei die Schneide (16""') zwei zu einer Schneidkante (18""') spitz zulaufende Schneidflächen (17a""', 17b""') aufweist, wobei die Schneidkante ( 18""') relativ zur Längsachse (19) und relativ zur Querachse (20) des Trägerblocks (2) geneigt ist.

17. Trägerblock (1) nach Anspruch 1, **dadurch gekennzeichnet, dass** die Mittel zur Aufnahme des Schneidkörpers (5 , 5' , 5" , 5"' , 5"" , 5""') als Bajonettverschluss sowohl am Trägerblock (1) als auch am Schneidkörper (5, 5' , 5" , 5"' , 5"" , 5""') ausgebildet sind.

18. Trägerblock (1) mit einem auswechselbaren Schneidkörper (5, 5 , 5' , 5" , 5"' , 5"", 5""') mit wenigstens einer Schneide (16, 16' , , 16", 16"', 16"" , 16""'), zur Positionierung des Trägerblocks (1) ) auf einer Halterung, insbesondere Arbeitsplatte, einer Lang-Drehmaschine, wobei der Trägerblock (1) wenigstens eine ebene, rückseitige Anlagefläche (3) zur Anlage an oder zur Aufnahme in der Halterung der Drehmaschine aufweist und derselbe zur Ausrichtung in Richtung einer zu bearbeitenden Stange innerhalb der Lang-Drehmaschine ausgebildet ist, **gekennzeichnet durch** die folgenden Merkmale:
a) der Trägerblock (1) weist an seinem vorderen Ende (4) eine zur zur Längsachse (19) des Trägerblocks (1) im Wesentlichen orthogonal gerichtete Stirnfläche (2) auf, in welcher eine Gewindebohrung (6) angeordnet ist
b) in der Stirnfläche (2) sind Nuten (8) oder Aussparungen vorhanden, welche unter gleichen Winkeln von der Gewindebohrung Gewindebohrung (6) ausgehend nach außen zur Peripherie des Trägerblocks (1) verlaufen
c) der Schneidkörper (5, 5', 5" , 5"' , 5"" , 5""'), der sich in montiertem Zustand in Fortsetzung des Trägerblocks (1) in Richtung der Längsachse (19) erstreckt, weist ein Durchgangsloch ( Durchgangsloch (14) zum Durchgang einer in die Gewindebohrung Gewindebohrung (6) passenden Schraube (7) zur Halterung des des Schneidkörpers auf der Stirnfläche (2) des Trägerblocks (1) ) sowie auf seiner der Stirnfläche (2) zugewandten ringförmigen Deckfläche (9') Erhebungen (9) auf, welche passend zum Eingriff Eingriff in die Nuten (8) oder Aussparungen innerhalb der Stirnfläche (2) des Trägerblocks (1) gestaltet sind d) die Schneide (16, 16' , 16" , 16"' , 16"", 16""') des Schneidkörpers (5 , 5', 5" , 5"' 5"", 5""') ragt ebenfalls in Richtung Richtung der Längsachse (19) des Trägerblocks (1), wobei die Außenfläche (16a) der Schneide im Wesentlichen in Fortsetzung der ebenen Anlagefläche (3) des Trägerblocks (1) mit der Anlagefläche (3) verläuft, jedoch gegenüber derselben zurückgesetzt ist und dieselbe nicht überragt.

## Claims

1. Support block (1) with an exchangeable cutting body (5, 5', 5", 5"', 5"", 5""') with at least one blade (16, 16', 16", 16"', 16"", 16""'), for positioning the support block (1) on a mounting, in particular a work plate, a lathe, preferably a longitudinal lathe, wherein the support block (1) includes at least one flat back contact face (3) for the contact on or for reception in the mounting of the lathe and such [face (3)] is implemented for the orientation in the direction of a rod to be worked within the lathe, **characterized in that** the support block (1) comprises at its front end (4) a front face (2) directed substantially orthogonally with respect to the longitudinal axis (19) of the support block (1), in or on which [front face] are implemented means for receiving the cutting body (5, 5', 5", 5"', 5"", 5""'), which [cutting body] extends in a continuation of the support block (1) in the direction of the longitudinal axis (19) of the same, wherein the blade (16, 16', 16", 16"', 16"", 16""') of the cutting body (5, 5', 5", 5"', 5"", 5""') also extends in the direction of the longitudinal axis (19) of the support block (1), wherein the receiving means comprises a threaded bore (6) within the front face (2) of the front end (4) of the support block (1), and the cutting body (5, 5', 5", 5"', 5"", 5""') comprises a through hole (14) for the passage of a bolt (7) fitting into the threaded bore (6) for mounting the cutting body (5, 5', 5", 5"', 5"", 5""') on the front face (2) of the front end (4) of the support block (1) and the blade (16, 16', 16", 16"', 16"", 16""') of the cutting body (5, 5', 5", 5"', 5"", 5""') projects in the direction of the longitudinal axis (19) of the support block (1) laterally to the through hole (14) and is oriented substantially orthogonally to the front face (2) of the support block (1).

2. Support block [1] as in claim 1, **characterized in that** the cutting body (5, 5', 5", 5"', 5"", 5""') comprises a peripheral flat cutting body side face (15') which is oriented parallel to the longitudinal axis (19) of the support block (1) and which is flush with the flat back contact face (3) in continuation of the same of the support block (1).

3. Support block [1] as in claim 1 or 2, **characterized in that** the cutting body (5, 5', 5", 5"', 5"", 5""') is at least partially implemented annularly as a sleeve (13) with the through hole (14) for the passage of the bolt (7) fitting into the threaded bore (6) of the support block (1), wherein the blade (16, 16', 16", 16"', 16"", 16""') is disposed on the margin of the sleeve (13).

4. Support block [1] as in one of the preceding claims **characterized in that** the annular sleeve (13) of the cutting body (5, 5', 5", 5"', 5"", 5""') comprises a partially orthogonal peripheral region (15) with a peripherally outwardly directed flat cutting body side face (15') which is flush with the flat back contact face (3) in continuation of the same of the support block (1), wherein from the peripheral region (15) projects the blade (16, 16', 16", 16"', 16"", 16""') in the direction of the longitudinal axis (19) of the cutting body (5, 5', 5"', 5"', 5"", 5""').

5. Support block [1] as in claim 4, **characterized in that** the orthogonal peripheral region (15) includes a narrow side face (15") from which rises the blade (16, 16', 16", 16"', 16"", 16""') which comprises an outer face (16a) that extends in continuation of the cutting body side face (15') of the cutting body (5, 5', 5", 5"', 5"", 5""') or is at least partially set back with respect to the cutting body side face (15') of the cutting body (5, 5', 5", 5"', 5"", 5""') and thus does not project beyond the cutting body side face (15').

6. Support block [1] as in one of the preceding claims, **characterized in that** the receiving means of the front end (4) of the support block (1) comprise grooves (8) or recesses disposed in the front face (2) for the engaging reception of elevations (9) of the cutting body (5, 5', 5", 5"', 5"", 5""'), or conversely.

7. Support block [1] as in one of the preceding claims, **characterized in that** the receiving means of the front end (4) of the support block (1) comprises guiding faces (10a, 10b, 10c), preferably three guiding faces, for positioning the cutting body (5, 5', 5", 5"', 5"", 5""'), which [faces] are separated from one another by grooves (8), which, starting from the threaded bore (6) or the longitudinal axis (19) of the support block (1), extend radially outwardly for the engaging reception of the elevations (9) implemented such that they match the grooves (8) on the annular face (9'), facing the front face (2), of the cutting body (5, 5', 5", 5"', 5"", 5""'), or conversely.

8. Support block [1] as in claim 7, **characterized in that** two guiding faces (10a, 10b) are implemented such that they form segments of an annulus and the third guiding face (10c) peripherally has a straight edge (11') which delimits the front end of the flat back contact face (3), wherein the blade (16, 16', 16", 16"', 16"", 16""') of the cutting body (5, 5', 5", 5"', 5"", 5""') extends substantially in continuation of the direction of the flat back contact face (3) along the straight edge (11').

9. Support block [1] as in claim 8, **characterized in that** the third guiding face (10c) having peripherally a straight edge terminates in an angular margin bead (11) which is developed at the front end (4) of the support block (1) and forms a plane with the flat back contact face (3) of the support block (1).

10. Support block [1] as in one of the preceding claims, **characterized in that** the support block (1) comprises an elongated orthogonal mounting region with four side faces (2, 3, 3', 12), wherein the margins of the segments, forming a partial annulus, of the two guiding faces (10a, 10b), project in the radial direction beyond the support block (1) on three of the side faces (2, 3, 3', 12) and the blade (16, 16', 16", 16"', 16"", 16""') of the cutting body (5, 5', 5", 5"', 5"", 5""') extends substantially in continuation of the direction of the flat contact face (3), which forms the fourth side face of the mounting region of the support block (1), wherein the outer face (16a) of the blade in continuation of the flat contact face (3) of the support block (1) is substantially flush with the contact face (3).

11. Support block [1] as in one of the preceding claims, **characterized in that** the cutting body (5) comprises a blade (16) for the radial cutting into the [working] rod, wherein the blade (16) comprises a cutting face (17) inclined relative to the longitudinal axis (19) of the support block (2) [*sic:* (1)].

12. Support block [1] as in one of the preceding claims 1 to 10, **characterized in that** the cutting body (5') comprises a blade (16') for cutting and longitudinal turning of the [working] rod, wherein the blade (16') comprises two cutting faces (17a', 17b') of different inclinations relative to the longitudinal axis (19) of the support block (2) *[sic:* (1)].

13. Support block [1] as in one of the preceding claims 1 to 10, **characterized in that** the cutting body (5") comprises a blade (16") for cutting off the [working] rod, wherein the blade (16") comprises a cutting face (17") that is inclined relative to the longitudinal axis (19) and relative to the transverse axis (20) of the support block (2) *[sic:* (1)] and terminates in a cutting edge (18") which has the same inclination relative to the longitudinal axis (19) as the cutting face (17") has to the longitudinal axis (19).

14. Support block [1] as in one of the preceding claims 1 to 10, ***characterized in that*** the cutting body (5'") comprises a blade (16"') for applying a groove-form toothed profile onto the [working] rod, wherein the blade (16'") has a cutting face (17"') with zig-zag shaped toothing terminating in several cutting edges (18'").

15. Support block [1] as in one of the preceding claims 1 to 10, ***characterized in that*** the cutting body (5"") comprises a blade (16"") with a groove-form curved profile wherein the blade (16"") comprises a cutting face (17"") in which an arc is developed that is delimited by two cutting edges (118"").

16. Support block [1] as in one of the preceding claims 1 to 10, ***characterized in that*** the cutting body (5""') comprises a blade (16"'") for thread cutting, wherein the blade (16"'") comprises two cutting faces (17a""', 17b""') tapering to a cutting edge (18'""), wherein the cutting edge (18'"") is inclined relative to the longitudinal axis (19) and relative to the transverse axis (20) of the support block (2) *[sic:* (1)].

17. Support block (1) as in claim 1, ***characterized in that*** the means for receiving the cutting body (5, 5', 5", 5"', 5"", 5'"") is developed as a bayonet fitting on the support block (1) as well as also on the cutting body (5, 5', 5", 5'", 5"", 5'"").

18. Support block (1) with an exchangeable cutting body (5, 5', 5", 5"', 5"", 5"'") with at least one blade (16, 16', 16", 16"', 16"", 16"'"), for positioning the support block (1) on a mounting, in particular a work plate, a lathe, wherein the support block (1) includes at least one flat back contact face (3) for the contact on or for reception in the mounting of the lathe and such (face) is implemented for the orientation in the direction of a rod to be worked within the longitudinal lathe,
**characterized by** the following attributes:
a) the support block (1) comprises at its front end (4) a front face (2), directed substantially orthogonally with respect to the longitudinal axis (19) of the support block (1), in which a threaded bore (6) is disposed,
b) in the front face (2) grooves (8) or recesses are provided, which extend at identical angles starting from the threaded bore (6) outwardly toward the periphery of the support block (1),
c) the cutting body (5, 5', 5", 5"', 5"", 5""'), which, in the mounted state, extends in continuation of the support block (1) in the direction of the longitudinal axis (19), comprises a through hole (14) for the passage of a bolt fitting (7) into the threaded bore (6) for mounting the cutting body on the front face (2) of the support block (1) as well as elevations (9) on its annular cover [*sic*] face (9') facing the front face (2), which [elevations] are implemented such that they match in engaging the grooves (8) or recesses within the front face (2) of the support block (1),
d) the blade (16, 16', 16", 16"', 16"", 16""') of the cutting body (5, 5', 5", 5"', z"", 5'"") also projects in the direction of the longitudinal axis (19) of the support block (1), wherein the outer face (16a) of the blade [(16, 16', 16". 16"', 16"". 16""')] extends substantially in continuation of the flat contact face (3) of the support block (1) [flush] with the contact face (3), however is set back with respect to the same and does not project beyond such.

## Revendications

1. Bloc de support (1) comprenant un corps de coupe remplaçable (5, 5', 5", 5'", 5"", 5""') avec au moins un tranchant (16, 16', 16", 16'", 16"", 16'"") pour le positionnement du bloc de support (1) sur une fixation, en particulier un plan de travail, d'une machine de tournage, de préférence d'une machine de tournage à poupée mobile, le bloc de support (1) présentant au moins une surface d'appui plane du côté arrière (3) pour l'application contre, ou pour la réception dans, la fixation de la machine de tournage et celui-ci étant réalisé de manière à s'orienter dans la direction d'une barre à usiner à l'intérieur de la machine de tournage, ***caractérisé en ce que*** le bloc de support (1) présente, au niveau de son extrémité avant (4), une surface frontale (2) orientée essentiellement perpendiculairement à l'axe longitudinal (19) du bloc de support (1), dans ou sur laquelle surface frontale sont réalisés des moyens pour recevoir le corps de coupe (5, 5', 5", 5"', 5"", 5""'), lequel s'étend dans le prolongement du bloc de support (1) dans la direction de l'axe longitudinal (19) de celui-ci, le tranchant (16, 15', 16", 16"", 15"", 16"'") du corps de coupe (5, 5', 5", 5'", 5"", 5""') s'étendant également dans la direction de l'axe longitudinal (19) du bloc de support (1), les moyens de réception présentant un alésage fileté (6) à l'intérieur de la surface frontale (2) de l'extrémité avant (4) du bloc de support (1), et le corps de coupe (5, 5', 5", 5'", 5"", 5""') présentant un trou traversant (14) pour le passage d'une vis (7) ajustée dans l'alésage fileté (6) pour la fixation du corps de coupe (5, 5', 5", 5"', 5"", 5""') sur la surface frontale (2) de l'extrémité avant (4) du bloc de support (1) et le tranchant (16, 16', 16", 16"', 16"", 16""') du corps de coupe (5, 5', 5", 5"', 5"", 5""') faisant saillie dans la direction de l'axe longitudinal (19) du bloc de support (1) latéralement par rapport au trou traversant (14) et étant orienté sensiblement perpendiculairement à la surface frontale (2) du bloc de support (1).

2. Bloc de support selon la revendication 1, ***caractérisé en ce que*** le corps de coupe (5, 5', 5", 5"', 5"", 5'"") présente une surface latérale de corps de coupe (15') plane, périphérique, qui est orientée parallèlement à l'axe longitudinal (19) du bloc de support (1) et qui est alignée avec la surface d'appui plane du côté arrière (3) du bloc de support (1), dans le prolongement de cette dernière.

3. Bloc de support selon la revendication 1 ou 2, ***caractérisé en ce que*** le corps de coupe (5, 5', 5", 5'", 5"", 5""') est configuré au moins en partie sous forme annulaire en tant que douille (13) avec le trou traversant (14) pour le passage de la vis (7) ajustée dans l'alésage fileté (6) du bloc de support (1), le tranchant (16, 16', 16", 16"', z6'"', 16""') étant disposé sur le bord de la douille (13).

4. Bloc de support selon l'une quelconque des revendications précédentes, ***caractérisé en ce que*** la douille annulaire (13) du corps de coupe (5, 5', 5", 5"', 5"", 5'"") présente une région périphérique en partie parallélépipédique (15) avec une surface latérale (15') de corps de coupe plane orientée circonférentiellement vers l'extérieur, qui est alignée avec la surface d'appui plane, du côté arrière (3) du bloc de support (1), dans le prolongement de cette dernière, le tranchant (16, 16', 16", 16'", 16"", 16"'") faisant saillie depuis la région périphérique (15) dans la direction de l'axe longitudinal (19) du corps de coupe (5, 5', 5", 5'", 5"". 5'"").

5. Bloc de support selon la revendication 4, ***caractérisé en ce que*** la région périphérique parallélépipédique (15) présente une surface latérale étroite (15") de laquelle fait saillie vers le haut le tranchant (16, 16', 16", 16"', 16"", 16'"") qui présente une surface extérieure (16a) qui s'étend dans le prolongement de la surface latérale du corps de coupe (15') du corps de coupe (5, 5', 5", 5"', 5"", 5""') ou qui est au moins en partie en retrait par rapport à la surface latérale du corps de coupe (15') du corps de coupe (5, 5', 5", 5"', 5"", 5"'") et qui ne dépasse donc pas de la surface latérale du corps de coupe (15').

6. Bloc de support selon l'une quelconque des revendications précédentes, ***caractérisé en ce que*** les moyens de réception de l'extrémité avant (4) du bloc de support (1) comprennent des rainures (8) ou des évidements disposés dans la surface frontale (2) pour y recevoir par engagement des rehaussements (9) du corps de coupe (5, 5', 5", 5"', 5"", 5""'), ou inversement.

7. Bloc de support selon l'une quelconque des revendications précédentes, ***caractérisé en ce que*** les moyens de réception de l'extrémité avant (4) du bloc de support (1) comprennent des surfaces de dressage (10a, 10b, 10c), de préférence trois surfaces de dressage, pour le positionnement du corps de coupe (5, 5', 5", 5"', 5"", 5'""), lesquelles sont séparées les unes des autres par des rainures (8) qui, à partir de l'alésage fileté (6) ou de l'axe longitudinal (19) du bloc de support (1), s'étendent radialement vers l'extérieur pour recevoir par engagement les rehaussements (9) configurés de manière adaptée aux rainures (8) sur la surface annulaire (9') du corps de coupe (5, 5', 5", 5"', 5"", 5"'") tournée vers la surface frontale (2), ou inversement.

8. Bloc de support selon la revendication 7, ***caractérisé en ce que*** deux surfaces de dressage (10a, 10b) sont configurées de telle sorte qu'elles constituent des segments d'une bague circulaire et la troisième surface de dressage (10c) présente sur sa périphérie un bord droit (11') qui limite l'extrémité avant de la surface d'appui plane, du côté arrière (3), le tranchant (16, 16', 16", 16"', 16"", 16"'") du corps de coupe (5, 5', 5". 5'", 5"", 5'"") s'étendant sensiblement dans le prolongement de la direction de la surface d'appui plane, du côté arrière (3) le long du bord droit (11').

9. Bloc de support selon la revendication 8, ***caractérisé en ce* que** la troisième surface de dressage (10c) présentant un bord droit sur sa périphérie débouche dans un bourrelet de bord angulaire (11) qui est réalisé au niveau de l'extrémité avant (4) du bloc de support (1) et qui forme un plan avec la surface d'appui plane, du côté arrière (3) du bloc de support (1).

10. Bloc de support selon l'une quelconque des revendications précédentes, ***caractérisé en ce que*** le bloc de support (1) présente une région de montage de forme parallélépipédique allongée avec quatre faces latérales (2, 3, 3', 12), les bords des segments des deux surfaces de dressage (10a, 10b) formant une bague circulaire partielle faisant saillie au-delà du bloc de support (1) au niveau de trois des faces latérales (2, 3, 3', 12) dans la direction radiale, et le tranchant (16, 16', 16", 16'", 16"", 16'"") du corps de coupe (5, 5', 5", 5"', 5"", 5'"") s'étendant sensiblement dans le prolongement de la direction de la surface d'appui plane (3), qui forme la quatrième face latérale de la région de montage du bloc de support (1), la surface extérieure (16a) du tranchant, sensiblement dans le prolongement de la surface d'appui plane (3) du bloc de support (1), étant alignée avec la surface d'appui (3).

11. Bloc de support selon l'une quelconque des revendications précédentes, ***caractérisé en ce que*** le corps de coupe (5) présente un tranchant (16) pour s'enfoncer radialement dans la barre, le tranchant (16) possédant une surface de coupe (17) inclinée par rapport à l'axe longitudinal (19) du bloc de support (2).

12. Bloc de support selon l'une quelconque des revendications précédentes 1 à 10, ***caractérisé en ce que*** le corps de coupe (5') présente un tranchant (16') pour s'enfoncer dans la barre et effectuer un tournage à poupée mobile de celle-ci, le tranchant (16') présentant deux surfaces de coupe (17a', 17b') d'inclinaisons différentes par rapport à l'axe longitudinal (19) du bloc de support (2).

13. Bloc de support selon l'une quelconque des revendications précédentes 1 à 10, ***caractérisé en ce que*** le corps de coupe (5") présente un tranchant (16") pour creuser la barre, le tranchant (16") présentant une surface de coupe (17") qui est inclinée par rapport à l'axe longitudinal (19) et par rapport à l'axe transversal (20) du bloc de support (2) et qui débouche dans une arête de coupe (18") qui présente la même inclinaison par rapport à l'axe longitudinal (19) que la surface de coupe (17") par rapport à l'axe longitudinal (19).

14. Bloc de support selon l'une quelconque des revendications 1 à 10, ***caractérisé en ce que*** le corps de coupe (5"') présente un tranchant (16"') pour l'application d'un profil en dents de scie par formage par enfoncement sur la barre, le tranchant (16"') présentant une surface de coupe (17'") dentée en forme de zigzag qui débouche dans plusieurs arêtes de coupe (18'").

15. Bloc de support selon l'une quelconque des revendications précédentes 1 à 10, ***caractérisé en ce que*** le corps de coupe (5"') présente un tranchant (16"") avec un profil rond de formage par enfoncement, le tranchant (16"") présentant une surface de coupe (17"") dans laquelle est réalisé un arc qui est limité par deux arêtes de coupe (18"").

16. Bloc de support selon l'une quelconque des revendications précédentes 1 à 10, ***caractérisé en ce que*** le corps de coupe (5""') présente un tranchant (16"'") pour filetage, le tranchant (16'"") présentant deux surfaces de coupe (17a""', 17b""') se terminant en pointe pour former une arête de coupe (18""'), l'arête de coupe (18""') étant inclinée par rapport à l'axe longitudinal (19) et par rapport à l'axe transversal (20) du bloc de support (2).

17. Bloc de support (1) selon la revendication 1, **caractérisé en ce que** les moyens pour recevoir le corps de coupe (5, 5', 5", 5"', 5"", 5"'") sont réalisés sous forme de fermeture à baïonnette à la fois au niveau du bloc de support (1) et au niveau du corps de coupe (5, 5', 5", 5'", 5"", 5""').

18. Bloc de support (1) comprenant un corps de coupe remplaçable (5, 5', 5", 5'". 5"", 5""') avec au moins un tranchant (16, 16', 16", 16"', 16"", 16""') pour le positionnement du bloc de support (1) sur une fixation, en particulier un plan de travail, d'une machine de tournage à poupée mobile, le bloc de support (1) présentant au moins une surface d'appui plane du côté arrière (3) pour l'application contre, ou pour la réception dans, la fixation de la machine de tournage et celui-ci étant réalisé de manière à s'orienter dans la direction d'une barre à usiner à l'intérieur de la machine de tournage à poupée mobile, **caractérisé par** les caractéristiques suivantes :
a) le bloc de support (1) présente, à son extrémité avant (4), une surface frontale (2) orientée essentiellement perpendiculairement à l'axe longitudinal (19) du bloc de support (1), dans laquelle est disposé un alésage fileté (6),
b) dans la surface frontale (2) sont prévus des rainures (8) ou des évidements qui s'étendent suivant les mêmes angles à partir de l'alésage fileté (6) vers l'extérieur vers la périphérie du bloc de support (1),
c) le corps de coupe (5, 5', 5", 5'", 5"". 5'""), qui s'étend dans l'état monté dans le prolongement du bloc de support (1) dans la direction de l'axe longitudinal (19), présente un trou traversant (14) pour le passage d'une vis (7) ajustée dans l'alésage fileté (6) pour la fixation du corps de coupe sur la surface frontale (2) du bloc de support (1) ainsi que des rehaussements (9) sur sa surface de recouvrement (9') de forme annulaire tournée vers la surface frontale (2), qui sont configurés de manière à s'ajuster pour l'engagement dans les rainures (8) ou les évidements à l'intérieur de la surface frontale (2) du bloc de support (1),
d) le tranchant (16, 16', 16", 16"', 16"", 16""') du corps de coupe (5, 5', 5", 5"', 5"", 5""') fait également saillie dans la direction de l'axe longitudinal (19) du bloc de support (1), la surface extérieure (16a) du tranchant s'étendant sensiblement dans le prolongement de la surface d'appui plane (3) du bloc de support (1) avec la surface d'appui (3), mais étant en retrait par rapport à celle-ci, et ne dépassant pas au-delà de celle-ci.
